# EUROPEAN PATENT APPLICATION

(11) **EP 3 238 540 A1**
(43) Date of publication of application: **01.11.2017**
(21) Application number: 16167415.5
(22) Date of filing: 28.04.2016
(51) Int. Cl.: A01N 25/26, A01N 43/56, A01P 3/00

(54) **TIMED-RELEASE-TYPE GRANULAR AGROCHEMICAL COMPOSITION AND METHOD FOR MANUFACTURING SAME**

(71) Applicant: Bayer CropScience Aktiengesellschaft, 40789 Monheim am Rhein (DE)
(72) Inventor: The designation of the inventor has not yet been filed
(74) Representative: BIP Patents

(57) **Abstract**

The present invention relates to a timed-release-type granular agrochemical composition formed by coating primary granules that comprise a mixed composition containing an agrochemical active ingredient, a swelling substance, a surfactant, and, depending on the circumstances, the other formulants; the primary granules being coated with a mixed composition containing a binder, a hydrophobic substance, a carrier, and, depending on the circumstances, the other formulants.

## Description

### TECHNICAL FIELD

The present invention relates to a "timed-release-type granular agrochemical composition" and a method for manufacturing the same, intended to mitigate chemical phytotoxicity to crops and sustain agrochemical potency.

### BACKGROUND ART

In the past, in order to mitigate chemical phytotoxicity and sustain potency in granular agrochemical agents that include agrochemical active ingredients, a variety of studies have been carried out on agents that can control the release of the agrochemical active ingredients. For example, Japanese Laid-Open Patent Application 9-143005 discloses an invention relating to a timed-disintegration-type multilayer coated agrochemical granular formulation in which the surface of a granular body having a water-swelling substance as a main component is coated with a composition comprising an agrochemical active ingredient and a thermoplastic resin, wherein the surface of the coated agrochemical granular formulation is further coated with a coating material having an olefin polymer or a copolymer thereof as a main component. Additionally, Japanese Laid-Open Patent Application 2003-183104 discloses an invention relating to a coated bioactive substance formed by coating the surface of bioactive substance particles with polyurethane obtained by reacting an isocyanate with a mixture of a polyol having a hydroxyl equivalent of 120 or less and a polyol having a hydroxyl equivalent of 150 or more. Both of these inventions involve coating primary granules with polymers, thereby enabling timed release. However, heating and drying are necessary in the coating step for coating polymers sufficient for the timed release of the agrochemical active ingredient or bioactive substance, and expensive manufacturing apparatuses provided with devices for heating and drying are also necessary; therefore, the coating step could take a long time, and the actual manufacturing costs could be quite high.

However, techniques in which no heating or drying is necessary in a coating step have also been developed. Japanese Laid-Open Patent Application 2007-176920 discloses an invention relating to a granular composition formed by coating primary granules using a mixed composition containing a pest-control active compound, a polymer resin, a hydrophobic substance, talc, a water-soluble substance, and, depending on the circumstances, the other formulants.

However, in the step for coating this granular composition, although heating and drying are unnecessary, the resulting granular composition cannot undergo timed release despite having the extended-release properties of the pest-control active compound; therefore, depending on the circumstances, problems have been presented such as insufficient mitigation of chemical phytotoxicity, insufficient release of the active compound even at the time when pest control is necessary, and the like.

### PRIOR ART REFERENCES

### PATENT REFERENCES

Patent Reference 1: Japanese Laid-Open Patent Application 9-143005
Patent Reference 2: Japanese Laid-Open Patent Application 2003-183104
Patent Reference 3: Japanese Laid-Open Patent Application 2007-176920

### SUMMARY OF THE INVENTION

### PROBLEMS TO BE SOLVED BY THE INVENTION

It is an object of the present invention to provide: a timed release-type granular agrochemical composition in which using an inexpensive tumbling- or centrifugal-tumbling-type granulator/mixer or the like having no heating function makes it possible to reduce manufacturing costs, the composition releasing an agrochemical active ingredient after a fixed period of time has elapsed following application, but not releasing the agrochemical active ingredient during the fixed period of time; as well as to provide a method for manufacturing the same. This makes it possible not only to reduce manufacturing costs, but also to mitigate chemical phytotoxicity and stabilize the effects.

### MEANS USED TO SOLVE THE ABOVE-MENTIONED PROBLEMS

As a result of thoroughgoing investigations intended to overcome the aforementioned problem, the inventors perfected the present invention by using an inexpensive tumbling- or centrifugal-tumbling-type granulator/mixer or the like having no heating function to coat primary granules that comprise a mixed composition containing a pest-control active compound, a swelling substance (bentonite, etc.), a surfactant, and, depending on the circumstances, the other formulants; the primary granules being coated with a mixed composition containing a binder, a hydrophobic substance, a carrier, and, depending on the circumstances, the other formulants.

Specifically, the present invention relates to a timed-release-type granular agrochemical composition formed by coating primary granules that comprise a mixed composition containing an agrochemical active ingredient, a swelling agent, a surfactant, and, depending on the circumstances, the other formulants; the primary granules being coated with a mixed composition containing a binder, a hydrophobic substance, a carrier, and, depending on the circumstances, the other formulants.

One aspect of the present invention relates to a timed-release-type granular agrochemical composition formed by coating primary granules that comprise at least one type of agrochemical active ingredient, a swelling substance, and, depending on the circumstances, a carrier, a surfactant, and/or the other formulants; the primary granules being coated with a binder, a hydrophobic substance, a carrier, and, depending on the circumstances, the other formulants.

Another aspect of the present invention relates to the aforementioned composition, wherein the swelling agent is selected from among bentonite, starch, and water-absorbent polymers.

Another aspect of the present invention relates to the aforementioned composition, wherein the surfactant is selected from among anionic surfactants, non-ionic surfactants, amphoteric surfactants, and cationic surfactants.

Another aspect of the present invention relates to the aforementioned composition, wherein the binder comprises a combination of a polyol and a polyisocyanate.

Another aspect of the present invention relates to the aforementioned composition, wherein the binder comprises a combination of a polyamine and a polyisocyanate.

Another aspect of the present invention relates to the aforementioned composition, wherein the polyol is selected from among polyether polyols, polyester polyols, polybutadiene polyols, polycarbonate polyols, and castor-oil-based (triglyceride-based) polyols.

Another aspect of the present invention relates to the aforementioned composition, wherein the polyamine is selected from among polyaspartic acid esters.

Another aspect of the present invention relates to the aforementioned composition, wherein the polyisocyanate is selected from among aromatic polyisocyanates and aliphatic polyisocyanates.

Another aspect of the present invention relates to the aforementioned composition, wherein the hydrophobic substance is selected from among calcium stearate, magnesium stearate, and aluminum stearate.

Another aspect of the present invention relates to the aforementioned composition, wherein the carrier is selected from among clay, finely powdered pumice, fired diatomaceous earth, kaolin, talc, acid clay, and calcium carbonate.

Another aspect of the present invention relates to a method for manufacturing the aforementioned timed-release-type granular agrochemical composition, the method comprising the following steps:
a first step for charging primary granules that comprise at least one type of agrochemical active compound, a swelling substance, and, depending on the circumstances, a carrier, a surfactant, and/or the other formulants into a tumbling- or centrifugal-tumbling-type granulator/mixer;
a second step for performing tumbling while adding a binder and a hydrophobic substance in alternating fashion or simultaneously;
a third step for performing tumbling while adding a binder and a carrier in alternating fashion or simultaneously, and then forming an outermost layer; and
a fourth step for heating the granular composition as needed.

Another aspect of the present invention relates to the aforementioned manufacturing method, wherein the swelling agent is selected from among bentonite, starch, and water-absorbent polymers.

Another aspect of the present invention relates to the aforementioned manufacturing method, wherein the surfactant is selected from among anionic surfactants, non-ionic surfactants, amphoteric surfactants, and cationic surfactants.

Another aspect of the present invention relates to the aforementioned manufacturing method, wherein the binder comprises a combination of a polyol and a polyisocyanate.

Another aspect of the present invention relates to the aforementioned manufacturing method, wherein the binder comprises a combination of a polyamine and a polyisocyanate.

Another aspect of the present invention relates to the aforementioned manufacturing method, wherein the polyol is selected from among polyether polyols, polyester polyols, polybutadiene polyols, polycarbonate polyols, and castor-oil-based (triglyceride-based) polyols.

Another aspect of the present invention relates to the aforementioned manufacturing method, wherein the polyamine is selected from among polyaspartic acid esters.

Another aspect of the present invention relates to the aforementioned manufacturing method, wherein the polyisocyanate is selected from among aromatic polyisocyanates and aliphatic polyisocyanates.

Another aspect of the present invention relates to the aforementioned manufacturing method, wherein the hydrophobic substance is selected from among calcium stearate, magnesium stearate, and aluminum stearate.

Another aspect of the present invention relates to the aforementioned manufacturing method, wherein the carrier is selected from among clay, finely powdered pumice, fired diatomaceous earth, kaolin, talc, acid clay, and calcium carbonate.

### BEST MODE FOR CARRYING OUT THE INVENTION

As a result of the present invention, use of a centrifugal-tumbling-type granulator (e.g., a Granurex made by Freund Corp., or a New Marumerizer made by Dalton Co., Ltd.) in an actual manufacturing space can be considered; however, since there is no need to impart a heating function thereto, the investment cost of the manufacturing apparatus can be reduced. Alternatively, a large-scale tumbling-type granulator/mixer (e.g., a concrete mixer or a Manson mixer) or the like that is typically used in agrochemical manufacturing, the granulator/mixer having no heating function, can be used, which promises further reductions in cost. Because it is not necessary to perform heating and drying during coating, the present invention is exceptional in terms of safety as well.

As a result, there is provided a timed-release-type granular agrochemical agent in which the release of the active ingredient is effectively controlled, whereby an exceptional biological effect lasts over a long period of time, and chemical phytotoxicity to useful plants can be mitigated. The present invention makes it possible to expect the mitigation of chemical phytotoxicity to young rice plants when applied to a nursery box as an insecticide/fungicide or to a water surface as an herbicide, and the continuation of biological effects after transplantation of rice seedling. However, rice cultivation is not cited by way of limitation; the present invention can be applied to all varieties of spaces where systemic chemical formulations are applied; i.e., to application of a chemical formulation in an upland field crop or the like, under non-flooded conditions.

The present invention is a granular agrochemical agent obtained by "powder coating," the weight of the hydrophobic substance exceeding the weight of the binder.

In the present invention, the term "agrochemical active compound" should be understood to refer to all substances that typically are or can be used to treat plants. Preferred examples of the agrochemical active compound include fungicides, bactericides, insecticides, acaricides, nematicides, molluscicides, herbicides, safeners, plant growth regulators, and plant nutrients, as well as biological control agents.

Examples of fungicides which may be mentioned are:
Group 1:
   Inhibitors of the ergosterol biosynthesis, for example (1.1) aldimorph, (1.2) azaconazole, (1.3) bitertanol, (1.4) bromuconazole, (1.5) cyproconazole, (1.6) diclobutrazole, (1.7) difenoconazole, (1.8) diniconazole, (1.9) diniconazole-M, (1.10) dodemorph, (1.11) dodemorph acetate, (1.12) epoxiconazole, (1.13) etaconazole, (1.14) fenarimol, (1.15) fenbuconazole, (1.16) fenhexamid, (1.17) fenpropidin, (1.18) fenpropimorph, (1.19) fluquinconazole, (1.20) flurprimidol, (1.21) flusilazole, (1.22) flutriafol, (1.23) furconazole, (1.24) furconazole-cis, (1.25) hexaconazole, (1.26) imazalil, (1.27) imazalil sulfate, (1.28) imibenconazole, (1.29) ipconazole, (1.30) metconazole, (1.31) myclobutanil, (1.32) naftifine, (1.33) nuarimol, (1.34) oxpoconazole, (1.35) paclobutrazol, (1.36) pefurazoate, (1.37) penconazole, (1.38) piperalin, (1.39) prochloraz, (1.40) propiconazole, (1.41) prothioconazole, (1.42) pyributicarb, (1.43) pyrifenox, (1.44) quinconazole, (1.45) simeconazole, (1.46) spiroxamine, (1.47) tebuconazole, (1.48) terbinafine, (1.49) tetraconazole, (1.50) triadimefon, (1.51) triadimenol, (1.52) tridemorph, (1.53) triflumizole, (1.54) triforine, (1.55) triticonazole, (1.56) uniconazole, (1.57) uniconazole-p, (1.58) viniconazole, (1.59) voriconazole, (1.60) 1-(4-chlorophenyl)-2-(1H-1,2,4-triazol-1-yl)cycloheptanol, (1.61) methyl 1-(2,2-dimethyl-2,3-dihydro-1H-inden-1-yl)-1H-imidazole-5-carboxylate, (1.62) N'-{5-(difluoromethyl)-2-methyl-4-[3-(trimethylsilyl)propoxy]phenyl; -N-ethyl-N-methylimidoformamide, (1.63) N-ethyl-N-methyl-N'- {2-methyl-5-(trifluoromethyl)-4-[3-(trimethylsilyl)propoxy]phenyl}imidoformamide, (1.64) O-[1-(4-methoxyphenoxy)-3,3-dimethylbutan-2-yl] 1H-imidazole-1-carbothioate, (1.65) Pyrisoxazole ;
Group 2:
   Inhibitors of the respiratory chain at complex I or II, for example (2.1) bixafen, (2.2) boscalid, (2.3) carboxin, (2.4) diflumetorim, (2.5) fenfuram, (2.6) fluopyram, (2.7) flutolanil, (2.8) fluxapyroxad, (2.9) furametpyr, (2.10) furmecyclox, (2.11) isopyrazam (mixture of syn-epimeric racemate 1RS,4SR,9RS and anti-epimeric racemate 1RS,4SR,9SR), (2.12) isopyrazam (anti-epimeric racemate 1RS,4SR,9SR), (2.13) isopyrazam (anti-epimeric enantiomer 1R,4S,9S), (2.14) isopyrazam (anti-epimeric enantiomer 1S,4R,9R), (2.15) isopyrazam (syn epimeric racemate 1RS,4SR,9RS), (2.16) isopyrazam (syn-epimeric enantiomer 1R,4S,9R), (2.17) isopyrazam (syn-epimeric enantiomer 1S,4R,9S), (2.18) mepronil, (2.19) oxycarboxin, (2.20) penflufen, (2.21) penthiopyrad, (2.22) sedaxane, (2.23) thifluzamide, (2.24) 1-methyl-N-[2-(1,1,2,2-tetrafluoroethoxy)phenyl]-3-(trifluoromethyl)-1H-pyrazole-4-carboxamide, (2.25) 3-(difluoromethyl)-1-methyl-N-[2-(1,1,2,2-tetrafluoroethoxy)phenyl]-1H-pyrazole-4-carboxamide, (2.26) 3-(difluoromethyl)-N-[4-fluoro-2-(,1,1,2,3,3,3-hexafluoropropoxy)phenyl]-1-methyl-1H-pyrazole-4-carboxamide, (2.27) N-[1-(2,4-dichlorophenyl)-1-methoxypropan-2-yl]-3-(difluoromethyl)-1-methyl-1H-pyrazole-4-carboxamide, (2.28) 5,8-difluoro-N-[2-(2-fluoro-4-{[4-(trifluoromethyl)pyridin-2-yl]oxy}phenyl)ethyl]quinazolin-4-amine, (2.29) benzovindiflupyr, (2.30) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.31) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.32) 3-(difluoromethyl)-1-methyl-N-(1,1,3-trimethyl-2,3-dihydro-1H-inden-4-yl)-1H-pyrazole-4-carboxamide, (2.33) 1,3,5-trimethyl-N-(1,1,3-trimethyl-2,3-dihydro-1H-inden-4-yl)-1H-pyrazole-4-carboxamide, (2.34) 1-methyl-3-(trifluoromethyl)-N-(1,1,3-trimethyl-2,3-dihydro-1H-inden-4-yl)-1H-pyrazole-4-carboxamide, (2.35) 1-methyl-3-(trifluoromethyl)-N-[(3R)-1,1,3-trimethyl-2,3-dihydro-1H-inden-4-yl]-1H-pyrazole-4-carboxamide, (2.36) 1-methyl-3-(trifluoromethyl)-N-[(3S)-1,1,3-trimethyl-2,3-dihydro-1H-inden-4-yl]-1H-pyrazole-4-carboxamide, (2.37) 3-(difluoromethyl)-1-methyl-N-[(3S)-1,1,3-trimethyl-2,3-dihydro-1H-inden-4-yl]-1H-pyrazole-4-carboxamide, (2.38) 3-(difluoromethyl)-1-methyl-N-[(3R)-1,1,3-trimethyl-2,3-dihydro-1H-inden-4-yl]-1H-pyrazole-4-carboxamide, (2.39) 1,3,5-trimethyl-N-[(3R)-1,1,3-trimethyl-2,3-dihydro-1H-inden-4-yl]-1H-pyrazole-4-carboxamide, (2.40) 1,3,5-trimethyl-N-[(3S)-1,1,3-trimethyl-2,3-dihydro-1H-inden-4-yl]-1H-pyrazole-4-carboxamide, (2.41) benodanil, (2.42) 2-chloro-N-(1,1,3-trimethyl-2,3-dihydro-1H-inden-4-yl)pyridine-3-carboxamide, (2.43) N-[1-(4-isopropoxy-2-methylphenyl)-2-methyl-1-oxopropan-2-yl]-3-methylthiophene-2-carboxamide ;
Group 3:
   Inhibitors of the respiratory chain at complex III, for example (3.1) ametoctradin, (3.2) amisulbrom, (3.3) azoxystrobin, (3.4) cyazofamid, (3.5) coumethoxystrobin, (3.6) coumoxystrobin, (3.7) dimoxystrobin, (3.8) enoxastrobin, (3.9) famoxadone, (3.10) fenamidone, (3.11) flufenoxystrobin, (3.12) fluoxastrobin, (3.13) kresoxim-methyl, (3.14) metominostrobin, (3.15) orysastrobin, (3.16) picoxystrobin, (3.17) pyraclostrobin, (3.18) pyrametostrobin, (3.19) pyraoxystrobin, (3.20) pyribencarb, (3.21) triclopyricarb, (3.22) trifloxystrobin, (3.23) (2E)-2-(2-{[6-(3-chloro-2-methylphenoxy)-5-fluoropyrimidin-4-yl]oxy}phenyl)-2-(methoxyimino)-N-methylacetamide, (3.24) (2E)-2-(methoxyimino)-N-methyl-2-(2-{[({(1E)-1-[3-(trifluoromethyl)phenyl]ethylidene}amino)oxy]methyl}phenyl)acetamide, (3.25) (2E)-2-(methoxyimino)-N-methyl-2-{2-[(E)-({1-[3-(trifluoromethyl)phenyl]ethoxy}imino)methyl]phenyl}acetamide, (3.26) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.27) Fenaminostrobin, (3.28) 5-methoxy-2-methyl-4-(2-{[({(1E)-1-[3-(trifluoromethyl)phenyl]ethylidene}amino)oxy]methyl}phenyl)-2,4-dihydro-3H-1,2,4-triazol-3-one, (3.29) methyl (2E)-2-{2-[({cyclopropyl[(4-methoxyphenyl)imino]methyl}sulfanyl)methyl]phenyl}-3-methoxyacrylate, (3.30) N-(3-ethyl-3,5,5-trimethylcyclohexyl)-3-formamido-2-hydroxybenzamide, (3.31) 2-{2-[(2,5-dimethylphenoxy)methyl]phenyl}-2-methoxy-N-methylacetamide, (3.32) 2-{2-[(2,5-dimethylphenoxy)methyl]phenyl}-2-methoxy-N-methylacetamide;
Group 4:
   Inhibitors of the mitosis and cell division, for example (4.1) benomyl, (4.2) carbendazim, (4.3) chlorfenazole, (4.4) diethofencarb, (4.5) ethaboxam, (4.6) fluopicolide, (4.7) fuberidazole, (4.8) pencycuron, (4.9) thiabendazole, (4.10) thiophanate-methyl, (4.11) thiophanate, (4.12) zoxamide, (4.13) 5-chloro-7-(4-methylpiperidin-1-yl)-6-(2,4,6-trifluorophenyl)[1,2,4]triazolo[1,5-a]pyrimidine, (4.14) 3-chloro-5-(6-chloropyridin-3-yl)-6-methyl-4-(2,4,6-trifluorophenyl)pyridazine;
Group 5:
   Compounds capable to have a multisite action, for example (5.1) bordeaux mixture, (5.2) captafol, (5.3) captan, (5.4) chlorothalonil, (5.5) copper hydroxide, (5.6) copper naphthenate, (5.7) copper oxide, (5.8) copper oxychloride, (5.9) copper(2+) sulfate, (5.10) dichlofluanid, (5.11) dithianon, (5.12) dodine, (5.13) dodine free base, (5.14) ferbam, (5.15) fluorofolpet, (5.16) folpet, (5.17) guazatine, (5.18) guazatine acetate, (5.19) iminoctadine, (5.20) iminoctadine albesilate, (5.21) iminoctadine triacetate, (5.22) mancopper, (5.23) mancozeb, (5.24) maneb, (5.25) metiram, (5.26) metiram zinc, (5.27) oxine-copper, (5.28) propamidine, (5.29) propineb, (5.30) sulfur and sulfur preparations including calcium polysulfide, (5.31) thiram, (5.32) tolylfluanid, (5.33) zineb, (5.34) ziram, (5.35) anilazine;
Group 6:
   Compounds capable to induce a host defence, for example (6.1) acibenzolar-S-methyl, (6.2) isotianil, (6.3) phosphonate, (6.4) fosetyl-aluminium, (6.5) probenazole, (6.6) saccharine, (6.7) tiadinil, (6.8) 2,6-dichloroiso nicotinic acid and its derivatives, (6.9) 3,5-dichloroanthranilic acid and its derivatives, (6.10) beta-aminobutyric acid and its derivatives, (6.10) laminarin, (6.11) beta-glucans, (6.12) heptamaloxyloglucan, (6.13) rhamnolipids, (6.14) chitin or chitin fragments; (6.15) lipochitooligosaccharides, (6.16) harpin protein, (6.17) humic acids, (6.18) lignin fragments and their derivatives ; preferably (6.1) acibenzolar-S-methyl, (6.2) isotianil, (6.5) probenazole, (6.7) tiadinil, (6.10) laminarin;
Group 7:
   Inhibitors of the amino acid and/or protein biosynthesis, for example (7.1) andoprim, (7.2) blasticidin-S, (7.3) cyprodinil, (7.4) kasugamycin, (7.5) kasugamycin hydrochloride hydrate, (7.6) mepanipyrim, (7.7) pyrimethanil, (7.8) 3-(5-fluoro-3,3,4,4-tetramethyl-3,4-dihydroisoquinolin-1-yl)quinoline, (7.9) oxytetracycline, (7.10) streptomycin;
Group 8:
   Inhibitors of the ATP production, for example (8.1) fentin acetate, (8.2) fentin chloride, (8.3) fentin hydroxide, (8.4) silthiofam;
Group 9:
   Inhibitors of the cell wall synthesis, for example (9.1) benthiavalicarb, (9.2) dimethomorph, (9.3) flumorph, (9.4) iprovalicarb, (9.5) mandipropamid, (9.6) polyoxins, (9.7) polyoxorim, (9.8) validamycin A, (9.9) valifenalate, (9.10) polyoxin B;
Group 10:
   Inhibitors of the lipid and membrane synthesis, for example (10.1) biphenyl, (10.2) chloroneb, (10.3) dicloran, (10.4) edifenphos, (10.5) etridiazole, (10.6) iodocarb, (10.7) iprobenfos, (10.8) isoprothiolane, (10.9) propamocarb, (10.10) propamocarb hydrochloride, (10.11) prothiocarb, (10.12) pyrazophos, (10.13) quintozene, (10.14) tecnazene, (10.15) tolclofos-methyl;
Group 11:
   Inhibitors of the melanin biosynthesis, for example (11.1) carpropamid, (11.2) diclocymet, (11.3) fenoxanil, (11.4) phthalide, (11.5) pyroquilon, (11.6) tricyclazole, (11.7) 2,2,2-trifluoroethyl {3-methyl-1-[(4-methylbenzoyl)amino]butan-2-yl}carbamate;
Group 12:
   Inhibitors of the nucleic acid synthesis, for example (12.1) benalaxyl, (12.2) benalaxyl-M (kiralaxyl), (12.3) bupirimate, (12.4) clozylacon, (12.5) dimethirimol, (12.6) ethirimol, (12.7) furalaxyl, (12.8) hymexazol, (12.9) metalaxyl, (12.10) metalaxyl-M (mefenoxam), (12.11) ofurace, (12.12) oxadixyl, (12.13) oxolinic acid, (12.14) octhilinone;
Group 13:
   Inhibitors of the signal transduction, for example (13.1) chlozolinate, (13.2) fenpiclonil, (13.3) fludioxonil, (13.4) iprodione, (13.5) procymidone, (13.6) quinoxyfen, (13.7) vinclozolin, (13.8) proquinazid;
Group 14:
   Compounds capable to act as an uncoupler, for example (14.1) binapacryl, (14.2) dinocap, (14.3) ferimzone, (14.4) fluazinam, (14.5) meptyldinocap;
Group 15:
   Further compounds, for example (15.1) benthiazole, (15.2) bethoxazin, (15.3) capsimycin, (15.4) carvone, (15.5) chinomethionat, (15.6) pyriofenone (chlazafenone), (15.7) cufraneb, (15.8) cyflufenamid, (15.9) cymoxanil, (15.10) cyprosulfamide, (15.11) dazomet, (15.12) debacarb, (15.13) dichlorophen, (15.14) diclomezine, (15.15) difenzoquat, (15.16) difenzoquat metilsulfate, (15.17) diphenylamine, (15.18) ecomate, (15.19) fenpyrazamine, (15.20) flumetover, (15.21) fluoroimide, (15.22) flusulfamide, (15.23) flutianil, (15.24) fosetyl-aluminium, (15.25) fosetyl-calcium, (15.26) fosetyl-sodium, (15.27) hexachlorobenzene, (15.28) irumamycin, (15.29) methasulfocarb, (15.30) methyl isothiocyanate, (15.31) metrafenone, (15.32) mildiomycin, (15.33) natamycin, (15.34) nickel dimethyldithiocarbamate, (15.35) nitrothal-isopropyl, (15.37) oxamocarb, (15.38) oxyfenthiin, (15.39) pentachlorophenol and salts, (15.40) phenothrin, (15.41) phosphorous acid and its salts, (15.42) propamocarb-fosetylate, (15.43) propanosine-sodium, (15.44) pyrimorph, (15.45) (2E)-3-(4-tert-butylphenyl)-3-(2-chloropyridin-4-yl)-1-(morpholin-4-yl)prop-2-en-1-one, (15.46) (2Z)-3-(4-tert-butylphenyl)-3-(2-chloropyridin-4-yl)-1-(morpholin-4-yl)prop-2-en-1-one, (15.47) pyrrolnitrine, (15.48) tebufloquin, (15.49) tecloftalam, (15.50) tolnifanide, (15.51) triazoxide, (15.52) trichlamide, (15.53) zarilamid, (15.54) (3S,6S,7R,8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate, (15.55) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.56) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.57) 1-(4-{4-[5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.58) 1-(4-methoxyphenoxy)-3,3-dimethylbutan-2-yl 1H-imidazole-1-carboxylate, (15.59) 2,3,5,6-tetrachloro-4-(methylsulfonyl)pyridine, (15.60) 2,3-dibutyl-6-chlorothieno[2,3-d]pyrimidin-4(3H)-one, (15.61) 2,6-dimethyl-1H,5H-[1,4]dithiino[2,3-c:5,6-c']dipyrrole-1,3,5,7(2H,6H)-tetrone, (15.62) 2-[5-methyl-3-(trifluoromethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanone, (15.63) 2-[5-methyl-3-(trifluoromethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanone, (15.64) 2-[5-methyl-3-(trifluoromethyl)-1H-pyrazol-1-yl]-1-{4-[4-(5-phenyl-4,5-dihydro-1,2-oxazol-3-yl)-1,3-thiazol-2-yl]piperidin-1-yl}ethanone, (15.65) 2-butoxy-6-iodo-3-propyl-4H-chromen-4-one, (15.66) 2-chloro-5-[2-chloro-1-(2,6-difluoro-4-methoxyphenyl)-4-methyl-1H-imidazol-5-yl]pyridine, (15.67) 2-phenylphenol and salts, (15.68) 3-(4,4,5-trifluoro-3,3-dimethyl-3,4-dihydroisoquinolin-1-yl)quinoline, (15.69) 3,4,5-trichloropyridine-2,6-dicarbonitrile, (15.70) 3-chloro-5-(4-chlorophenyl)-4-(2,6-difluorophenyl)-6-methylpyridazine, (15.71) 4-(4-chlorophenyl)-5-(2,6-difluorophenyl)-3,6-dimethylpyridazine, (15.72) 5-amino-1,3,4-thiadiazole-2-thiol, (15.73) 5-chloro-N'-phenyl-N'-(prop-2-yn-1-yl)thiophene-2-sulfonohydrazide, (15.74) 5-fluoro-2-[(4-fluorobenzyl)oxy]pyrimidin-4-amine, (15.75) 5-fluoro-2-[(4-methylbenzyl)oxy]pyrimidin-4-amine, (15.76) 5-methyl-6-octyl[1,2,4]triazolo[1,5-a]pyrimidin-7-amine, (15.77) ethyl (2Z)-3-amino-2-cyano-3-phenylacrylate, (15.78) N'-(4-{[3-(4-chlorobenzyl)-1,2,4-thiadiazol-5-yl]oxy}-2,5-dimethylphenyl)-N-ethyl-N-methylimidoformamide, (15.79) N-(4-chlorobenzyl)-3-[3-methoxy-4-(prop-2-yn-1-yloxy)phenyl]propanamide, (15.80) N-[(4-chlorophenyl)(cyano)methyl]-3-[3-methoxy-4-(prop-2-yn-1-yloxy)phenyl]propanamide, (15.81) N-[(5-bromo-3-chloropyridin-2-yl)methyl]-2,4-dichloronicotinamide, (15.82) N-[1-(5-bromo-3-chloropyridin-2-yl)ethyl]-2,4-dichloronicotinamide, (15.83) N-[1-(5-bromo-3-chloropyridin-2-yl)ethyl]-2-fluoro-4-iodonicotinamide, (15.84) N-{(E)-[(cyclopropylmethoxy)imino][6-(difluoromethoxy)-2,3-difluorophenyl]methyl}-2-phenylacetamide, (15.85) N-{(Z)-[(cyclopropylmethoxy)imino][6-(difluoromethoxy)-2,3-difluorophenyl]methyl}-2-phenylacetamide, (15.86) N'-{4-[(3-tert-butyl-4-cyano-1,2-thiazol-5-yl)oxy]-2-chloro-5-methylphenyl}-N-ethyl-N-methylimidoformamide, (15.87) N-methyl-2-(1-{[5-methyl-3-(trifluoromethyl)-1H-pyrazol-1-yl]acetyl}piperidin-4-yl)-N-(1,2,3,4-tetrahydronaphthalen-1-yl)-1,3-thiazole-4-carboxamide, (15.88) N-methyl-2-(1-{[5-methyl-3-(trifluoromethyl)-1H-pyrazol-1-yl]acetyl}piperidin-4-yl)-N-[(1R)-1,2,3,4-tetrahydronaphthalen-1-yl]-1,3-thiazole-4-carboxamide, (15.89) N-methyl-2-(1-{[5-methyl-3-(trifluoromethyl)-1H-pyrazol-1-yl]acetyl}piperidin-4-yl)-N-[(1S)-1,2,3,4-tetrahydronaphthalen-1-yl]-1,3-thiazole-4-carboxamide, (15.90) pentyl {6-[({[(1-methyl-1H-tetrazol-5-yl)(phenyl)methylene]amino}oxy)methyl]pyridin-2-yl}carbamate, (15.91) phenazine-1-carboxylic acid, (15.92) quinolin-8-ol, (15.93) quinolin-8-ol sulfate (2:1), (15.94) tert-butyl {6-[({[(1-methyl-1H-tetrazol-5-yl)(phenyl)methylene]amino}oxy)methyl]pyridin-2-yl}carbamate, (15.95) 1-methyl-3-(trifluoromethyl)-N-[2'-(trifluoromethyl)biphenyl-2-yl]-1H-pyrazole-4-carboxamide, (15.96) N-(4'-chlorobiphenyl-2-yl)-3-(difluoromethyl)-1-methyl-1H-pyrazole-4-carboxamide, (15.97) N-(2',4'-dichlorobiphenyl-2-yl)-3-(difluoromethyl)-1-methyl-1H-pyrazole-4-carboxamide, (15.98) 3-(difluoromethyl)-1-methyl-N-[4'-(trifluoromethyl)biphenyl-2-yl]-1H-pyrazole-4-carboxamide, (15.99) N-(2',5'-difluorobiphenyl-2-yl)-1-methyl-3-(trifluoromethyl)-1H-pyrazole-4-carboxamide, (15.100) 3-(difluoromethyl)-1-methyl-N-[4'-(prop-1-yn-1-yl)biphenyl-2-yl]-1H-pyrazole-4-carboxamide, (15.101) 5-fluoro-1,3-dimethyl-N-[4'-(prop-1-yn-1-yl)biphenyl-2-yl]-1H-pyrazole-4-carboxamide, (15.102) 2-chloro-N-[4'-(prop-1-yn-1-yl)biphenyl-2-yl]nicotinamide, (15.103) 3-(difluoromethyl)-N-[4'-(3,3-dimethylbut-1-yn-1-yl)biphenyl-2-yl]-1-methyl-1H-pyrazole-4-carboxamide, (15.104) N-[4'-(3,3-dimethylbut-1-yn-1-yl)biphenyl-2-yl]-5-fluoro-1,3-dimethyl-1H-pyrazole-4-carboxamide, (15.105) 3-(difluoromethyl)-N-(4'-ethynylbiphenyl-2-yl)-1-methyl-1H-pyrazole-4-carboxamide, (15.106) N-(4'-ethynylbiphenyl-2-yl)-5-fluoro-1,3-dimethyl-1H-pyrazole-4-carboxamide, (15.107) 2-chloro-N-(4'-ethynylbiphenyl-2-yl)nicotinamide, (15.108) 2-chloro-N-[4'-(3,3-dimethylbut-1-yn-1-yl)biphenyl-2-yl]nicotinamide, (15.109) 4-(difluoromethyl)-2-methyl-N-[4'-(trifluoromethyl)biphenyl-2-yl]-1,3-thiazole-5-carboxamide, (15.110) 5-fluoro-N-[4'-(3-hydroxy-3-methylbut-1-yn-1-yl)biphenyl-2-yl]-1,3-dimethyl-1H-pyrazole-4-carboxamide, (15.111) 2-chloro-N-[4'-(3-hydroxy-3-methylbut-1-yn-1-yl)biphenyl-2-yl]nicotinamide, (15.112) 3-(difluoromethyl)-N-[4'-(3-methoxy-3-methylbut-1-yn-1-yl)biphenyl-2-yl]-1-methyl-1H-pyrazole-4-carboxamide, (15.113) 5-fluoro-N-[4'-(3-methoxy-3-methylbut-1-yn-1-yl)biphenyl-2-yl]-1,3-dimethyl-1H-pyrazole-4-carboxamide, (15.114) 2-chloro-N-[4'-(3-methoxy-3-methylbut-1-yn-1-yl)biphenyl-2-yl]nicotinamide, (15.115) (5-bromo-2-methoxy-4-methylpyridin-3-yl)(2,3,4-trimethoxy-6-methylphenyl)methanone, (15.116) N-[2-(4-{[3-(4-chlorophenyl)prop-2-yn-1-yl]oxy}-3-methoxyphenyl)ethyl]-N2-(methylsulfonyl)valinamide, (15.117) 4-oxo-4-[(2-phenylethyl)amino]butanoic acid, (15.118) but-3-yn-1-yl {6-[({[(Z)-(1-methyl-1H-tetrazol-5-yl)(phenyl)methylene]amino}oxy)methyl]pyridin-2-yl}carbamate, (15.119) 4-amino-5-fluoropyrimidin-2-ol (mesomeric form: 4-amino-5-fluoropyrimidin-2(1H)-one), (15.120) propyl 3,4,5-trihydroxybenzoate, (15.121) 1,3-dimethyl-N-(1,1,3-trimethyl-2,3-dihydro-1H-inden-4-yl)-1H-pyrazole-4-carboxamide, (15.122) 1,3-dimethyl-N-[(3R)-1,1,3-trimethyl-2,3-dihydro-1H-inden-4-yl]-1H-pyrazole-4-carboxamide, (15.123) 1,3-dimethyl-N-[(3S)-1,1,3-trimethyl-2,3-dihydro-1H-inden-4-yl]-1H-pyrazole-4-carboxamide, (15.124) [3-(4-chloro-2-fluorophenyl)-5-(2,4-difluorophenyl)-1,2-oxazol-4-yl](pyridin-3-yl)methanol, (15.125) (S)-[3-(4-chloro-2-fluorophenyl)-5-(2,4-difluorophenyl)-1,2-oxazol-4-yl](pyridin-3-yl)methanol, (15.126) (R)-[3-(4-chloro-2-fluorophenyl)-5-(2,4-difluorophenyl)-1,2-oxazol-4-yl](pyridin-3-yl)methanol, (15.127) 2-{[3-(2-chlorophenyl)-2-(2,4-difluorophenyl)oxiran-2-yl]methyl;-2,4-dihydro-3H-1,2,4-triazole-3-thione, (15.128) 1-{[3-(2-chlorophenyl)-2-(2,4-difluorophenyl)oxiran-2-yl]methyl}-1H-1,2,4-triazol-5-yl thiocyanate, (15.129) 5-(allylsulfanyl)-1-{[3-(2-chlorophenyl)-2-(2,4-difluorophenyl)oxiran-2-yl]methyl}-1H-1,2,4-triazole, (15.130) 2-[1-(2,4-dichlorophenyl)-5-hydroxy-2,6,6-trimethylheptan-4-yl]-2,4-dihydro-3H-1,2,4-triazole-3-thione, (15.131) 2-{[rel(2R,3S)-3-(2-chlorophenyl)-2-(2,4-difluorophenyl)oxiran-2-yl]methyl}-2,4-dihydro-3H-1,2,4-triazole-3-thione, (15.132) 2-{[rel(2R,3R)-3-(2-chlorophenyl)-2-(2,4-difluorophenyl)oxiran-2-yl]methyl}-2,4-dihydro-3H-1,2,4-triazole-3-thione, (15.133) 1-{[rel(2R,3S)-3-(2-chlorophenyl)-2-(2,4-difluorophenyl)oxiran-2-yl]methyl}-1H-1,2,4-triazol-5-yl thiocyanate, (15.134) 1-{[rel(2R,3R)-3-(2-chlorophenyl)-2-(2,4-difluorophenyl)oxiran-2-yl]methyl}-1H-1,2,4-triazol-5-yl thiocyanate, (15.135) 5-(allylsulfanyl)-1-{[rel(2R,3S)-3-(2-chlorophenyl)-2-(2,4-difluorophenyl)oxiran-2-yl]methyl} -1 H-1,2,4-triazole, (15.136) 5-(allylsulfanyl)-1-{[rel(2R,3R)-3-(2-chlorophenyl)-2-(2,4-difluorophenyl)oxiran-2-yl]methyl}-1H-1,2,4-triazole, (15.137) 2-[(2S,4S,5S)-1-(2,4-dichlorophenyl)-5-hydroxy-2,6,6-trimethylheptan-4-yl]-2,4-dihydro-3H-1,2,4-triazole-3-thione, (15.138) 2-[(2R,4S,5S)-1-(2,4-dichlorophenyl)-5-hydroxy-2,6,6-trimethylheptan-4-yl]-2,4-dihydro-3H-1,2,4-triazole-3-thione, (15.139) 2-[(2R,4R,SR)-1-(2,4-dichlorophenyl)-5-hydroxy-2,6,6-trimethylheptan-4-yl]-2,4-dihydro-3H-1,2,4-triazole-3-thione, (15.140) 2-[(2S,4R,5R)-1-(2,4-dichlorophenyl)-5-hydroxy-2,6,6-trimethylheptan-4-yl]-2,4-dihydro-3H-1,2,4-triazole-3-thione, (15.141) 2-[(2S,4S,5R)-1-(2,4-dichlorophenyl)-5-hydroxy-2,6,6-trimethylheptan-4-yl]-2,4-dihydro-3H-1,2,4-triazole-3-thione, (15.142) 2-[(2R,4S,5R)-1-(2,4-dichlorophenyl)-5-hydroxy-2,6,6-trimethylheptan-4-yl]-2,4-dihydro-3H-1,2,4-triazole-3-thione, (15.143) 2-[(2R,4R,5S)-1-(2,4-dichlorophenyl)-5-hydroxy-2,6,6-trimethylheptan-4-yl]-2,4-dihydro-3H-1,2,4-triazole-3-thione, (15.144) 2-[(2S,4R,5S)-1-(2,4-dichlorophenyl)-5-hydroxy-2,6,6-trimethylheptan-4-yl]-2,4-dihydro-3H-1,2,4-triazole-3-thione, (15.145) 2-fluoro-6-(trifluoromethyl)-N-(1,1,3-trimethyl-2,3-dihydro-1H-inden-4-yl)benzamide, (15.146) 2-(6-benzylpyridin-2-yl)quinazoline, (15.147) 2-[6-(3-fluoro-4-methoxyphenyl)-5-methylpyridin-2-yl]quinazoline, (15.148) 3-(4,4-difluoro-3,3-dimethyl-3,4-dihydroisoquinolin-1-yl)quinoline, (15.149) Abscisic acid, (15.150) 3-(difluoromethyl)-N-methoxy-1-methyl-N-[1-(2,4,6-trichlorophenyl)propan-2-yl]-1H-pyrazole-4-carboxamide, (15.151) N'-[5-bromo-6-(2,3-dihydro-1H-inden-2-yloxy)-2-methylpyridin-3-yl]-N-ethyl-N-methylimidoformamide, (15.152) N'-{5-bromo-6-[1-(3,5-difluorophenyl)ethoxy]-2-methylpyridin-3-yl}-N-ethyl-N-methylimidoformamide, (15.153) N'-{5-bromo-6-[(1R)-1-(3,5-difluorophenyl)ethoxy]-2-methylpyridin-3-yl}-N-ethyl-N-methylimidoformamide, (15.154) N'-{5-bromo-6-[(1S)-1-(3,5-difluorophenyl)ethoxy]-2-methylpyridin-3-yl}-N-ethyl-N-methylimidoformamide, (15.155) N'-{5-bromo-6-[(cis-4-isopropylcyclohexyl)oxy]-2-methylpyridin-3-yl}-N-ethyl-N-methylimidoformamide, (15.156) N'- {5-bromo-6-[(trans-4-isopropylcyclohexyl)oxy]-2-methylpyridin-3-yl}-N-ethyl-N-methylimidoformamide, (15.157) N-cyclopropyl-3-(difluoromethyl)-5-fluoro-N-(2-isopropylbenzyl)-1-methyl-1H-pyrazole-4-carboxamide, (15.158) N-cyclopropyl-N-(2-cyclopropylbenzyl)-3-(difluoromethyl)-5-fluoro-1-methyl-1H-pyrazole-4-carboxamide, (15.159) N-(2-tert-butylbenzyl)-N-cyclopropyl-3-(difluoromethyl)-5-fluoro-1-methyl-1H-pyrazole-4-carboxamide, (15.160) N-(5-chloro-2-ethylbenzyl)-N-cyclopropyl-3-(difluoromethyl)-5-fluoro-1-methyl-1H-pyrazole-4-carboxamide, (15.161) N-(5-chloro-2-isopropylbenzyl)-N-cyclopropyl-3-(difluoromethyl)-5-fluoro-1-methyl-1H-pyrazole-4-carboxamide, (15.162) N-cyclopropyl-3-(difluoromethyl)-N-(2-ethyl-5-fluorobenzyl)-5-fluoro-1-methyl-1H-pyrazole-4-carboxamide, (15.163) N-cyclopropyl-3-(difluoromethyl)-5-fluoro-N-(5-fluoro-2-isopropylbenzyl)-1-methyl-1H-pyrazole-4-carboxamide, (15.164) N-cyclopropyl-N-(2-cyclopropyl-5-fluorobenzyl)-3-(difluoromethyl)-5-fluoro-1-methyl-1H-pyrazole-4-carboxamide, (15.165) N-(2-cyclopentyl-5-fluorobenzyl)-N-cyclopropyl-3-(difluoromethyl)-5-fluoro-1-methyl-1H-pyrazole-4-carboxamide, (15.166) N-cyclopropyl-3-(difluoromethyl)-5-fluoro-N-(2-fluoro-6-isopropylbenzyl)-1-methyl-1H-pyrazole-4-carboxamide, (15.167) N-cyclopropyl-3-(difluoromethyl)-N-(2-ethyl-5-methylbenzyl)-5-fluoro-1-methyl-1H-pyrazole-4-carboxamide, (15.168) N-cyclopropyl-3-(difluoromethyl)-5-fluoro-N-(2-isopropyl-5-methylbenzyl)-1-methyl-1H-pyrazole-4-carboxamide, (15.169) N-cyclopropyl-N-(2-cyclopropyl-5-methylbenzyl)-3-(difluoromethyl)-5-fluoro-1-methyl-1H-pyrazole-4-carboxamide, (15.170) N-(2-tert-butyl-5-methylbenzyl)-N-cyclopropyl-3-(difluoromethyl)-5-fluoro-1-methyl-1H-pyrazole-4-carboxamide, (15.171) N-[5-chloro-2-(trifluoromethyl)benzyl]-N-cyclopropyl-3-(difluoromethyl)-5-fluoro-1-methyl-1H-pyrazole-4-carboxamide, (15.172) N-cyclopropyl-3-(difluoromethyl)-5-fluoro-1-methyl-N-[5-methyl-2-(trifluoromethyl)benzyl]-1H-pyrazole-4-carboxamide, (15.173) N-[2-chloro-6-(trifluoromethyl)benzyl]-N-cyclopropyl-3-(difluoromethyl)-5-fluoro-1-methyl-1H-pyrazole-4-carboxamide, (15.174) N-[3-chloro-2-fluoro-6-(trifluoromethyl)benzyl]-N-cyclopropyl-3-(difluoromethyl)-5-fluoro-1-methyl-1H-pyrazole-4-carboxamide, (15.175) N-cyclopropyl-3-(difluoromethyl)-N-(2-ethyl-4,5-dimethylbenzyl)-5-fluoro-1-methyl-1H-pyrazole-4-carboxamide, (15.176) N-cyclopropyl-3-(difluoromethyl)-5-fluoro-N-(2-isopropylbenzyl)-1-methyl-1H-pyrazole-4-carbothioamide, (15.177) 3-(difluoromethyl)-N-(7-fluoro-1,1,3-trimethyl-2,3-dihydro-1H-inden-4-yl)-1-methyl-1H-pyrazole-4-carboxamide, (15.178) 3-(difluoromethyl)-N-[(3R)-7-fluoro-1,1,3-trimethyl-2,3-dihydro-1H-inden-4-yl]-1-methyl-1H-pyrazole-4-carboxamide, (15.179) 3-(difluoromethyl)-N-[(3S)-7-fluoro-1,1,3-trimethyl-2,3-dihydro-1H-inden-4-yl]-1-methyl-1H-pyrazole-4-carboxamide, (15.180) N'-(2,5-dimethyl-4-phenoxyphenyl)-N-ethyl-N-methylimidoformamide, (15.181) N'-{4-[(4,5-dichloro-1,3-thiazol-2-yl)oxy]-2,5-dimethylphenyl}-N-ethyl-N-methylimidoformamide.

Examples preferably include (systemic) fungicides having a octanol/water partition coefficient (LogPow) of 5 or less.

Examples of the preferred fungicides which may be mentioned are: inhibitors of the respiratory chain at complex I or II (group 2), inhibitors of the respiratory chain at complex III (group 3), compounds capable to induce a host defence (group 6), inhibitors of the lipid and membrane synthesis (group 10) and inhibitors of the melanin biosynthesis (group 11).

Examples of the most preferred fungicides which may be mentioned are: probenazole, tiadinil, isotianil, furametpyr, thifluzamide, penflufen, orysastrobin, azoxystrobin, metominostrobin, carpropamid, fenoxanil, diclocymet, tricyclazole, isoprothiolane, tolprocarb and pyroquilon.

Examples of bactericides which may be mentioned are:
bronopol, dichlorophen, nitrapyrin, nickel dimethyldithiocarbamate, kasugamycin, octhilinone, furancarboxylic acid, oxytetracycline, probenazole, streptomycin, tecloftalam, copper sulphate and other copper preparations.

Examples of insecticides, acaricides and nematicides which may be mentioned are:
(1) Acetylcholinesterase (AChE) inhibitors, for example carbamates, e.g. alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, and xylylcarb; or organophosphates, e.g. acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl, O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion, and imicyafos.
(2) GABA-gated chloride channel antagonists, for example organochlorines, e.g. camphechlor, chlordane, endosulfan, gamma-HCH, HCH, heptachlor, lindane, and methoxychlor; or fiproles (phenylpyrazoles), e.g. acetoprole, ethiprole, fipronil, pyrafluprole, pyriprole, and vaniliprole.
(3) Sodium channel modulators/voltage-dependent sodium channel blockers, for example pyrethroids, e.g. acrinathrin, allethrin (d-cis-trans, d-trans), beta-cyfluthrin, bifenthrin, bioallethrin, bioallethrin S-cyclopentyl isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (1R isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1R trans isomer), prallethrin, profluthrin, protrifenbute, pyresmethrin, resmethrin, RU 15525, silafluofen, tau-fluvalinate, tefluthrin, terallethrin, tetramethrin (-1R- isomer), tralomethrin, transfluthrin, ZXI 8901, pyrethrin (pyrethrum), eflusilanat; DDT; or methoxychlor.
(4) Nicotinergic acetylcholine receptor agonists/antagonists, for example chloronicotinyls, e.g. acetamiprid, clothianidin, dinotefuran, flupyradifurone, imidacloprid, imidaclothiz, nitenpyram, nithiazine, thiacloprid, thiamethoxam, AKD-1022; or nicotine, bensultap, cartap, thiosultap-sodium, and thiocylam.
(5) Allosteric acetylcholine receptor modulators (agonists), for example spinosyns, e.g. spinosad and spinetoram.
(6) Chloride channel activators, for example mectins/macrolides, e.g. abamectin, emamectin, emamectin benzoate, ivermectin, lepimectin, and milbemectin; or juvenile hormone analogues, e.g. hydroprene, kinoprene, methoprene, epofenonane, triprene, fenoxycarb, pyriproxifen, and diofenolan.
(7) Active ingredients with unknown or non-specific mechanisms of action, for example gassing agents, e.g. methyl bromide, chloropicrin and sulfuryl fluoride; selective antifeedants, e.g. cryolite, pymetrozine, pyrifluquinazon and flonicamid; or mite growth inhibitors, e.g. clofentezine, hexythiazox, etoxazole.
(8) Oxidative phosphorylation inhibitors, ATP disruptors, for example diafenthiuron; organotin compounds, e.g. azocyclotin, cyhexatin and fenbutatin oxide; or propargite, tetradifon.
(9) Oxidative phoshorylation decouplers acting by interrupting the H proton gradient, for example chlorfenapyr, binapacryl, dinobuton, dinocap and DNOC.
(10) Microbial disruptors of the insect gut membrane, for example *Bacillus thuringiensis* strains.
(11) Chitin biosynthesis inhibitors, for example benzoylureas, e.g. bistrifluron, chlorfluazuron, diflubenzuron, fluazuron, flucycloxuron, flufenoxuron, hexaflumuron, lufenuron, novaluron, novi-flumuron, penfluron, teflubenzuron or triflumuron.
(12) Buprofezin.
(13) Moulting disruptors, for example cyromazine.
(14) Ecdysone agonists/disruptors, for example diacylhydrazines, e.g. chromafenozide, halofenozide, methoxyfenozide, tebufenozide, and Fufenozide (JS118); or azadirachtin.
(15) Octopaminergic agonists, for example amitraz.
(16) Site III electron transport inhibitors/site II electron transport inhibitors, for example hydramethylnon; acequinocyl; fluacrypyrim; or cyflumetofen and cyenopyrafen.
(17) Electron transport inhibitors, for example Site I electron transport inhibitors, from the group of the METI acaricides, e.g. fenazaquin, fenpyroximate, pyrimidifen, pyridaben, tebufenpyrad, tolfenpyrad, and rotenone; or voltage-dependent sodium channel blockers, e.g. indoxacarb and metaflumizone.
(18) Fatty acid biosynthesis inhibitors, for example tetronic acid derivatives, e.g. spirodiclofen and spiromesifen; or tetramic acid derivatives, e.g. spirotetramat.
(19) Neuronal inhibitors with unknown mechanism of action, e.g. bifenazate.
(20) Ryanodine receptor effectors, for example diamides, e.g. flubendiamide, (R),(S)-3-chloro-N¹-{2-methyl-4-[1,2,2,2-tetrafluoro-1-(trifluoromethyl)ethyl]phenyl}-N²-(1-methyl-2-methylsulphonylethyl)phthalamide, chlorantraniliprole (Rynaxypyr), tetraniliprole, or Cyantraniliprole (Cyazypyr).
(21) Further active ingredients with unknown mechanism of action, for example amidoflumet, benclothiaz, benzoximate, bromopropylate, buprofezin, chinomethionat, chlordimeform, chlorobenzilate, clothiazoben, cycloprene, dicofol, dicyclanil, fenoxacrim, fentrifanil, flubenzimine, flufenerim, flutenzin, gossyplure, japonilure, metoxadiazone, petroleum, potassium oleate, pyridalyl, sulfluramid, tetrasul, triarathene or verbutine; or one of the following known active compounds 4-{[(6-bromopyrid-3-yl)methyl](2-fluoroethyl)amino}furan-2(5H)-one, 4-{[(6-fluoropyrid-3-yl)methyl](2,2-difluoroethyl)amino}furan-2(5H)-one, 4-{[(2-chloro-1,3-thiazol-5-yl)methyl](2-fluoroethyl)amino}furan-2(5H)-one, 4-{[(6-chloropyrid-3-yl)methyl](2-fluoroethyl)amino}furan-2(5H)-one, 4-{[(6-chloropyrid-3-yl)methyl](2,2-difluoroethyl)amino}furan-2(5H)-one (all known from WO 2007/115644), 4-{[(5,6-dichloropyrid-3-yl)methyl](2-fluoroethyl)amino}furan-2(5H)-one (known from WO 2007/115646), 4-{[(6-chloro-5-fluoropyrid-3-yl)methyl](methyl)amino}furan-2(5H)-one, 4-{[(6-chloro-5-fluoro-pyrid-3-yl)methyl](cyclopropyl)amino}furan-2(5H)-one (both from WO 2007/115643), 4-{[(6-chloropyrid-3-yl)methyl](cyclopropyl)amino}furan-2(5H)-one, 4-{[(6-chloropyrid-3-yl)methyl]-(methyl)amino}furan-2(5H)-one (both from EP-A-0 539 588), [(6-chloropyridin-3-yl)methyl](methyl)oxido-λ⁴-sulfanylidene cyanamide, [1-(6-chloropyridin-3-yl)ethyl](methyl)oxido-λ⁴-sulfanylidene cyanamide (both from WO 2007/149134) and its diastereomeres (A) and (B) 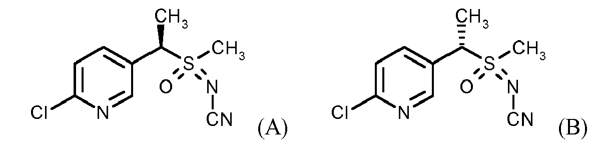 (also known from WO 2007/149134), [(6-trifluoromethylpyridin-3-yl)methyl](methyl)oxido-λ⁴-sulfanylidene cyanamide (known from WO 2007/095229), or [1-(6-trifluoromethylpyridin-3-yl)ethyl](methyl)oxido-λ⁴-sulfanylidene cyanamide (known from WO 2007/149134) and its diastereomeres (C) and (D), namely Sulfoxaflor(also known from WO 2007/149134)

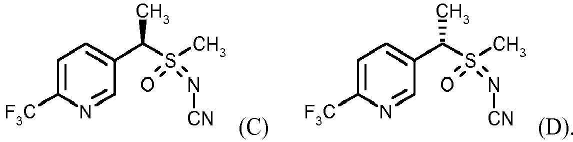

Examples preferably include (systematic) insecticides having a LogPow of 5 or less.

Examples the preferred insecticides which may be mentioned are: (1) Acetylcholinesterase (AChE) inhibitors, (2) GABA-gated chloride channel antagonists, (3) Sodium channel modulators/voltage-dependent sodium channel blockers, (4) Nicotinergic acetylcholine receptor agonists/antagonists, (5) Allosteric acetylcholine receptor modulators (agonists), (7) selective antifeedants, (11) Chitin biosynthesis inhibitors (18), fatty acid biosynthesis inhibitors and (20) Ryanodine receptor effectors.

Examples the most preferred insecticides which may be mentioned are: imidacloprid, thiacloprid, clothianidin, thiamethoxam, dinotefuran, flupyradifurone, chlorantraniliprole, tetraniliprole, cyantraniliprole, pymetrozine, fipronil, ethiprole, spinosad, spinetoram, benfuracarb, carbosulfan, etofenprox, buprofezin, bensultap, cartap and spirotetramat.

Examples of molluscicides which may be mentioned are metaldehyde and methiocarb.

Examples of Herbicides or plant growth regulators which may be mentioned are:
Acetochlor, acibenzolar, acibenzolar-S-methyl, acifluorfen, acifluorfen sodium, aclonifen, alachlor, allidochlor, alloxydym, alloxydym sodium, ametrine, amicarbazone, amidochlor, amidosulfone, aminocyclopyrachlor, aminopyralid, amitrole, ammonium sulfamate, ancymidol, anilofos, asulam, atrazine, azafenidin, azimsulfuron, aziprotryne, beflubutamid, benazolin, benazolin-ethyl, bencarbazone, benfluralin, benfuresate, bensulide, bensulfuron, bensulfuron methyl, bentazon, benzfendizone, benzobicyclon, benzofenap, benzofluor, benzoylprop, cyclopyrrolone, bifenox, bilanafos, bilanafos sodium, bispyribac, bispyribac sodium, bromacil, bromobutide, bromophenoxym, bromoxynil, bromuron, buminafos, busoxinone, butachlor, butafenacil, butamifos, butenachlor, butralin, butroxydim, butyrate, cafenstrole, carbetamide, carfentrazone, carfentrazone ethyl, clomethoxyfen, chloramben, chlorazifop, chlorazifop butyl, chlorbromuron, chlorbufam, chlorfenac, chlorfenac sodium, chlorfenprop, chlorflurenol, chlorflurenol methyl, chloridazon, chlorimuron, chlorimuron ethyl, chlormequat chloride, chloronitrofen, chlorophthalim, chlorthal dimethyl, chlorotoluron, chlorsulfuron, cinidon, cinidon ethyl, cinmethylin, cinosulfuron, clethodim, clodinafop, clodinafop propargyl, clofencet, clomazone, clomeprop, cloprop, clopyrarid, cloransulam, cloransulam methyl, cumyluron, cyanamide, cyanazine, cyclanilide, cycloate, cyclosulfamuron, cycloxydim, cycluron, cyhalofop, cyhalofop butyl, cyperquat, cyprazine, cyprazole, 2,4-D, 2,4-DB, daimuron/dymron, dalapon, daminozide, dazomet, n-decanol, desmedipham, desmetryne, detosyl pyrazolate (DTp), diallate, dicamba, dichlobenil, dichloroprop, dichloroprop-p, diclofop, diclofop methyl, diclofop-p-methyl, diclosulam, diethatyl, diethatyl ethyl, difenoxuron, difenzoquat, diflufenican, diflufenzopyr, diflufenzopyr sodium, dimefuron, dikegulac sodium, dimefuron, dimepiperate, dimethachlor, dimethametryn, dimethenamide, dimethenamide-p, dimethipin, dimetrasulfuron, dinitramine, dinoseb, dinoterb, diphenamid, dipropetryn, diquat, diquat dibromide, dithiopyr, diuron, triafamone, DNOC, eglinazine ethyl, endothal, EPTC, esprocarb, ethalfluralin, ethametsulfuron, ethametsulfuron methyl, ethephon, ethidimuron, ethiozin, ethofumesate, ethoxyfen, ethoxyfen ethyl, ethoxysulfuron, etobenzanide, F-5331, i.e., N-[2-chloro-4-fluoro-5-[4-(3-fluoropropyl)-4,5-dihydro-5-oxo-1H-tetrazole-1-yl]-phenyl]-ethane sulfonamide, F-7967, i.e., 3-[7-chloro-5-fluoro-2-(trifluoromethyl)-1H-benzimidazole-4-yl]-1-methyl-6-(trifluoromethyl)pyrimidine-2, 4(1H, 3H)-dione, fenoprop, fenoxaprop, fenoxaprop-p, fenoxaprop ethyl, fenoxaprop-p ethyl, fenoxasulfone, fentrazamide, fenuron, flamprop, flamprop-M-isopropyl, flamprop-M-methyl, flazasulfuron, florasuram, fluazifop, fluazifop-p, fluazifop butyl, fluazifop-p-butyl, fluazolate, flucarbazone, flucarbazone sodium, flucetosulfuron, fluchloralin, flufenacet, thiafluamide, flufenpyr, flufenpyr ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, fluorochloridone, fluoroxypyr, fluoroxypyr-meptyl, flurprimidol, flurtamone, fluthiacet, fluthiacet-methyl, fluthiamide, fomesafen, foramsulfuron, forchlorfenuron, fosamine, furyloxyfen, gibberellic acid, glufosinate, glufosinate-ammonium, glufosinate-p, glufosinate-p-ammonium, glufosinate-p-sodium, glyphosate, glyphosate-isopropylammonium, H-9201, i.e., 0-(2,4-dimethyl-6-nitrophenyl)-0-ethyl-isopropyl phosphoramide thioatethioate, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e., (2,4-dichlorophenoxy)1-(dimethoxyphosphoryl)-ethyl acetate), imazamethabenz, imazamethabenz-methyl, imazamox, imazamox-ammonium, imazapic, imazapyr, imazapyr-isoprpyl ammonium, imazaquin, imazaquin-ammonium, imazethapyr, imazethapyr-ammonium, imazosulfuron, inabenfide, indanofan, indaziflam, indoleacetic acid (IAA), 4-indol-3-ylbutyric acid (IBA), iodosulfuron, iodosulfuron-methyl-sodium, ioxynil, indaziflam, isocarbamid, isopropalin, isoproturon, isouron, isoxaben, isoxachlortole, isoxaflutole, isoxapyrifop, KUH-043, i.e., 3-({[5-(difluoromethyl)-1-methyl-3- (trifluoromethyl)-1H-pyrazol-4-yl]methyl}sulfoni)-5,5-dimethyl-4,5-dihydro-1,2-oxazole, karbutilate, ketospiradox, lactofen, lenacil, linuron, maleic hydrazide, MCPA, MCPB, MCPB-methyl, -ethyl and -sodium, mecoprop, mecoprop-sodium, mecoprop-butotyl, mecoprop-P-butotyl, mecoprop-P-dimethylammonium, mecoprop-P-2-ethylhexyl, mecoprop-P-potassium, mefenacet, mefluidide, mepiquat-chloride, mesosulfuron, mesosulfuron-methyl, mesotrione, methabenzthiazuron, metam, metamifop, metamitron, metazachlor, metazasulfuron, methazole, methiopyrsulfuron, methiozolin, methoxyphenone, methyldymron, 1-methylcyclopropen, methyl isothiocyanate, metobenzuron, metobromuron, metolachlor, S-metolachlor, metosulam, metoxuron, metribuzin, metsulfuron, metsulfuron-methyl, molinate, monalide, monocarbamide, monocarbamide-dihydrogen sulfate, monolinuron, monosulfuron, monosulfuron ester, monuron, MT 128, i.e., 6-chloro-N-[(2E)-3-chloroprop-2-en-1-yl]-5-methyl-N-phenyl pyridazine-3-amine, MT-5950, i.e., N-[3-chloro-4-(1-methylethyl)-phenyl]-2-methyl pentanamide, NGGC-011, naproanilide, napropamide, naptalam, NC-310, i.e., 4-(2,4-dichlorobenzoyl)-1-methyl-5-benzyloxy pyrazole, neburon, nicosulfuron, nipyraclofen, nitralin, nitrofen, nitrophenolate-sodium (isomer mixture), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazole, paraquat, paraquat-dichloride, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazole, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone sodium, propyrisulfuron, propyzamide, prosulfalin, prosulfocarb, prosulfuron, prynachlor, pyraclonil, pyraflufen, pyraflufen-ethyl, pyrasulfotole, pyrazolynate (pyrazolate), pyrazosulfuron, pyrazosulfuron ethyl, pyrazoxyfen, pyribambenz, pyribambenz isopropyl, pyribenzoxim, pyributicarb, pyridafol, pyridate, pyriftalid, pyriminobac, pyriminobac methyl, pyrimisulfan, pyrithiobac, pyrithiobac-sodium, pyroxasulfone, pyroxsulam, benzyl aminopurine, quinclorac, quinmerac, quinoclamine, quizalofop, quizalofop-ethyl, quizalofop-P, quizalofop-P-ethyl, quizalofop-P-tefuryl, rimsulfuron, saflufenacil, secbumeton, sethoxydim, siduron, simazine, simetryn, SN-106279, i.e., methyl-(2R)-2({7-[2-chloro-4-(tnf[uoromethyl)phenoxy]-2-naphthyl)oxy)propanoate; sulcotrione, sulfallate (CDEC), sulfentrazone, sulfometuron, sulfometuron methyl, sulfosate (glyphosate-trimesium), sulfosulfuron, SYN-523, SYP-249, i.e., 1-ethoxy-3-methyl-1-oxobut-3-en-2-yl-5-[2-chloro 4-(trifluoromethyl)phenoxy]-2-nitro benzoate, SYP-300, i.e., 1-[7-fluoro-3-oxo-4-(prop-2-in-1-yl)-3,4-dihydro-2H-1,4-benzoxazine-6-yl]-3-propyl-2-thioxo imidazolidine-4,5-dione, tebutam, tebuthiuron, tecnazene, tefuryltrione, tembotrione, tepraloxydim, terbacil, terbucarb, terbuchlor, terbumeton, terbuthylazine, terbutryne, thenylchlor, thiafluamide, thiazafluoron, thiazopyr, thidiazimin, thidiazuron, thiencarbazone, thiencarbazone methyl, thiobencarb, tiocarbazil, topramezone, tralkoxydim, tri-allate, triasulfuron, triaziflam, triazofenamide, tribenuron, tribenuron methyl, trichloroacetic acid (TCA), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, tritosulfuron, tsitodef, uniconazole, uniconazole-P, vernolate, ZJ-0862, i.e., 3,4-dichloro-N-{2-[(4,6-dimethoxypyrimidine-2-yl)oxy]benzyl} aniline, and the following compounds: 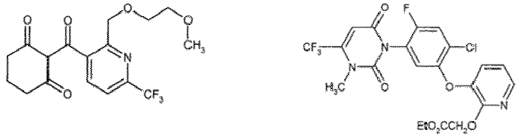 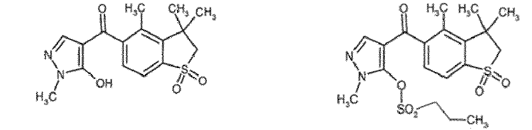 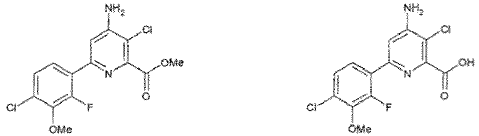
MBH-024 flowable (Herbicide/Growth Regulator Test Results, Japan Association for Advancement of Phyto-Regulators).

Examples of safeners which may be mentioned are:
(1) Heterocyclic carboxylic acid derivates, for example dichlorophenylpyrazolin-3-carboxylic acid derivatives, e.g. 1-(2,4-dichlorophenyl)-5-(ethoxycarbonyl)-5-methyl-4,5-dihydro-1H-pyrazole-3-carboxylic acid, diethyl 1-(2,4-dichlorophenyl)-4,5-dihydro-5-methyl-1H-pyrazole-3,5-dicarboxylate ("mefenpyr-diethyl"), and similar compounds known from WO 91/07874; for example dichlorophenylpyrazolecarboxylic acid derivatives, e.g. ethyl 1-(2,4-dichlorophenyl)-5-methyl-1H-pyrazole-3-carboxylate, ethyl 1-(2,4-dichlorophenyl)-5-isopropyl-1H-pyrazole-3-carboxylate, ethyl 5-tert-butyl-1-(2,4-dichlorophenyl)-1H-pyrazole-3-carboxylate and similar compounds known from EP-A 0 333 131 and EP-A 0 269 806; for example 1,5-diphenylpyrazole-3-carboxylic acid derivatives, e.g. ethyl 1-(2,4-dichlorophenyl)-5-phenyl-1H-pyrazole-3-carboxylate, methyl 1-(2-chlorophenyl)-5-phenyl-1H-pyrazole-3-carboxylate, and similar compounds known from EP-A 0 268 554; for example triazolecarboxylic acid derivatives, e.g. fenchlorazole, fenchlorazole-ethyl, and similar compounds known from EP-A 0 174 562 and EP-A 0 346 620; for example 2-isoxazoline-3-carboxylic acid derivatives, e.g. ethyl 5-(2,4-dichlorobenzyl)-4,5-dihydro-1,2-oxazole-3-carboxylate, ethyl 5-phenyl-4,5-dihydro-1,2-oxazole-3-carboxylate and similar compounds known from WO 91/08202, or 5,5-diphenyl-4,5-dihydro-1,2-oxazole-3-carboxylic acid, ethyl 5,5-diphenyl-4,5-dihydro-1,2-oxazole-3-carboxylate ("isoxadifen-ethyl"), propyl 5,5-diphenyl-4,5-dihydro-1,2-oxazole-3-carboxylate, ethyl 5-(4-fluorophenyl)-5-phenyl-4,5-dihydro-1,2-oxazole-3-carboxylate known from WO 95/07897.
(2) Derivatives of 8-quinolinol, for example derivatives of (quinolin-8-yloxy)acetic acid, e.g. heptan-2-yl [(5-chloroquinolin-8-yl)oxy]acetate ("cloquintocet-mexyl"), 4-methylpentan-2-yl [(5-chloroquinolin-8-yl)oxy]acetate,4-(allyloxy)butyl [(5-chloroquinolin-8-yl)oxy]acetate, 1-(allyloxy)propan-2-yl [(5-chloroquinolin-8-yl)oxy]acetate, ethyl [(5-chloroquinolin-8-yl)oxy]acetate, methyl [(5-chloroquinolin-8-yl)oxy] acetate, allyl [(5-chloroquinolin-8-yl)oxy] acetate, 2-{[propylideneamino]oxy}ethyl [(5-chloroquinolin-8-yl)oxy]acetate, 2-oxopropyl [(5-chloroquinolin-8-yl)oxy]acetate, and similar compounds known from EP-A 0 086 750, EP-A 0 094 349, EP-A 0 191 736 or EP-A 0 492 366, as well as [(5-chloroquinolin-8-yl)oxy]acetic acid, its hydrates and salts, e.g. the lithium, sodium, potassium, calcium, magnesium, aluminum, iron, ammonium, quartanary ammonium, sulfonium or phosphonium salts as known from WO 02/34048; for example derivatives of [(5-chloroquinolin-8-yl)oxy]malonic acid, e.g diethyl [(5-chloroquinolin-8-yl)oxy]malonate, diallyl [(5-chloroquinolin-8-yl)oxy]malonate, ethyl methyl [(5-chloroquinolin-8-yl)oxy]malonate, and similar compounds known from EP-A 0 582 198.
(3) Dichloroacetamides, which are often used as pre-emergence safeners (soil active safeners), e.g. "dichlormid" (N,N-diallyl-2,2-dichloroacetamide), "R-29148" (3dichloroacetyl-2,2,5-trimethyl-1,3-oxazolidine) and "R-28725" (3-dichloroacetyl-2,2,-dimethyl-1,3-oxazolidine) both of the company Stauffer, "benoxacor" (4-dichloroacetyl-3,4-dihydro-3-methyl-2H-1,4-benzoxazine), "PPG-1292" (N-allyl-N-[(1,3-dioxolan-2-yl)-methyl]-dichloroacetamide) of PPG Industries, "DKA-24" (N-allyl-N-[(allylaminocarbonyl)methyl]-dichloro-acetamide) of Sagro-Chem, "AD-67" or "MON 4660" (3-dichloroacetyl-1-oxa-3-aza-spiro[4,5]decane) of Nitrokemia and Monsanto, "TI-35" (1-dichloroacetyl-azepane) of TRI-Chemical RT, "diclonon" (dicyclonon) or "BAS145138" or "LAB145138" (3-dichloroacetyl-2,5,5-trimethyl-1,3-diazabicyclo[4.3.0]nonane) of BASF, "Furilazol" or "MON 13900" [(RS)-3-dichloroacetyl-5-(2-furyl)-2,2-dimethyloxazolidine], as well as there (R)-isomer.
(4) Acylsulfonamides, for example N-acylsulfonamide of the formula (II) 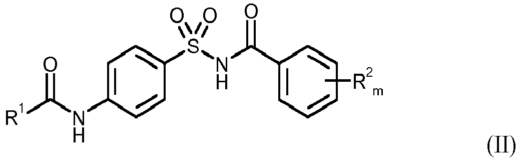 or its salts (known from WO 97/45016), wherein
   R¹ represents (C₁-C₆)alkyl, which is unsubstituted or mono- to trisubstituted by substituents selected from the group consisting of halogen, (C₁-C₄)alkoxy, (C₁-C₆)haloalkoxy and (C₁-C₄)alkylthio;
   R² represents halogen, (C₁-C₄)alkyl, (C₁-C₄)alkoxy, CF₃;
   m is 1 or 2;
   or for example 4-(benzoylsulfamoyl)benzamides of the formula (III) 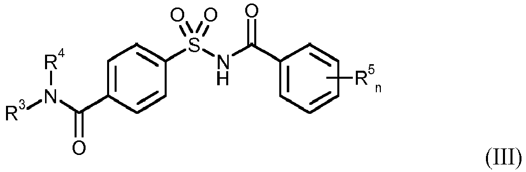 or its salts (known from WO 99/16744), wherein
   R³, R⁴independently of one another represent hydrogen, (C₁-C₆)alkyl, (C₃-C₆)alkenyl, (C₃-C₆)alkynyl, (C₃-C₆)cycloalkyl,
   R⁵ represents halogen, (C₁-C₄)alkyl, (C₁-C₄)haloalkyl or (C₁-C₄)alkoxy
   n is 1 or 2,
   in particular compounds of formula (III), wherein
   R³ = cyclopropyl, R⁴ = hydrogen and R⁵ₙ = 2-OMe, ("cyprosulfamide"),
   R³ = cyclopropyl, R⁴ = hydrogen and R⁵ₙ = 5-Cl-2-OMe,
   R³ = ethyl, R⁴ = hydrogen and R⁵ₙ = 2-OMe,
   R³ = isopropyl, R⁴ = hydrogen and R⁵ₙ = 5-Cl-2-OMe,
   R³ = isopropyl, R⁴ = hydrogen and R⁵ₙ = 2-OMe.
   or for example benzoylsulfamoylphenylureas of the formula (IV) 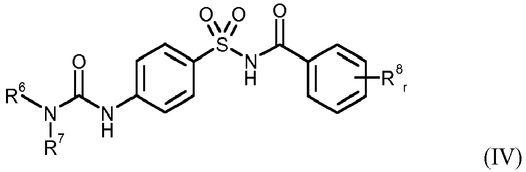 (known from EP-A 0 365 484), wherein
   R⁶, R⁷independently of one another represent hydrogen, (C₁-C₈)alkyl, (C₃-C₆)alkenyl, (C₃-C₆)alkynyl,
   R⁸ represents halogen, (C₁-C₄)alkyl, (C₁-C₄)alkoxy, CF₃
   r is 1 or 2;
   in particular
   1-[4-(N-2-methoxybenzoylsulfamoyl)phenyl]-3-methyl urea,
   1-[4-(N-2-methoxybenzoylsulfamoyl)phenyl]-3,3-dimethyl urea,
   1-[4-(N-4,5-dimethylbenzoylsulfamoyl)phenyl]-3-methyl urea.
(5) Hydroxyaromatic compounds and aromatic-aliphatic carboxylic acid derivatives, e.g. ethyl 3,4,5-triacetoxybenzoate, 4-hydroxy-3,5-dimethoxybenzoic acid, 3,5-dihydroxybenzoic acid, 2,4-dihydroxybenzoic acid, 4-fluoro-2-hydroxybenzoic acid, 2-hydroxycinnamic acid, 2,4-dichlorocinnamic acid (cf. WO 2004/084631, WO 2005/015994, WO 2005/016001).
(6) 1,2-Dihydrochinoxalin-2-ones, e.g. 1-methyl-3-(2-thienyl)-1,2-dihydrochinoxalin-2-one, 1-methyl-3-(2-thienyl)-1,2-dihydrochinoxalin-2-thione, 1-(2-aminoethyl)-3-(2-thienyl)-1,2-dihydrochinoxalin-2-one hydrochlorid, 1-(2-methylsulfonylaminoethyl)-3-(2-thienyl)-1,2-dihydrochinoxalin-2-one (cf. WO 2005/112630).
(7) Diphenylmethoxyacetic acid derivatives, e.g. methyl (diphenylmethoxy)acetate (CAS-Reg. No. 41858-19-9), ethyl(diphenylmethoxy)acetate or (diphenylmethoxy)acetic acid (cf. WO 98/38856).
(8) Compounds of formula (V) 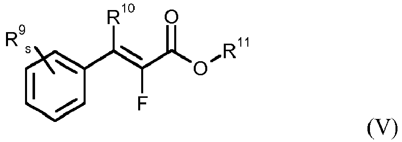 or its salts (known from WO 98/27049), wherein
   R⁹ represents halogen, (C₁-C₄)alkyl, (C₁-C₄)haloalkyl, (C₁-C₄)alkoxy, (C₁-C₄)haloalkoxy,
   R¹⁰ represents hydrogen or (C₁-C₄)alkyl,
   R¹⁰ represents hydrogen, in each case unsubstituted or mono- to trisubstituted (C₁-C₈)alkyl, (C₂-C₄)alkenyl, (C₂-C₄)alkynyl, or aryl, where the substituents are selected from the group consisting of halogen and (C₁-C₈)alkoxy,
   s is 0, 1 or 2.
(9) 3-(5-Tetrazolylcarbonyl)-2-chinolones, e.g. 1,2-dihydro-4-hydroxy-1-ethyl-3-(5-tetrazolyl-carbonyl)-2-chinolone (CAS-Reg. No. 219479-18-2), 1,2-dihydro-4-hydroxy-1-methyl-3-(5-tetrazolyl-carbonyl)-2-chinolone (CAS-Reg. No. 95855-00-8) (cf. WO 99/00020).
(10) Compounds of the formulae (VI-a) and (VI-b) 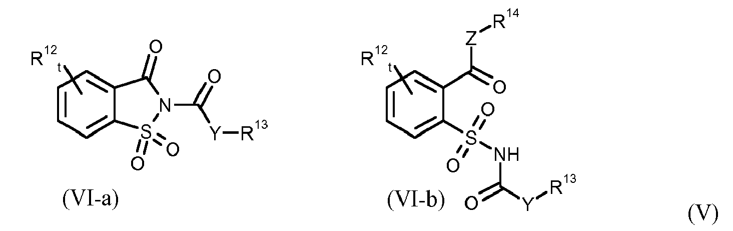 (known from WO 2007/023719 and WO 2007/023764), wherein
   R¹² represents halogen, (C₁-C₄)alkyl, methoxy, nitro, cyano, CF₃, OCF₃,
   Y, Z independently represent O or S,
   t is 0, 1, 2, 3 or 4,
   R¹³ represents (C₁-C₁₆)alkyl, (C₂-C₆)alkenyl, aryl, benzyl, halogenobenzyl,
   R¹⁴ represents hydrogen or (C₁-C₆)alkyl.
(11) Oxyimino compounds, known as seed treatment agents, e.g. "oxabetrinil" [(Z)-1,3-dioxolan-2-ylmethoxyimino(phenyl)acetonitril], "fluxofenim" [1-(4-chlorophenyl)-2,2,2-trifluoro-1-ethanone-O-(1,3-dioxolan-2-ylmethyl)-oxime], and "cyometrinil" or "CGA-43089" [(Z)-cyanomethoxy-imino(phenyl)-acetonitril], all known as seed treatment safener for sorghum against damage by metolachlor.
(12) Isothiochromanones, e.g. methyl [(3-oxo-1H-2-benzothiopyran-4(3H)-ylidene)methoxy]acetate (CAS-Reg. No. 205121-04-6) and similar compounds known from WO 98/13361.
(13) Compounds from the group consisting of "naphthalic anhydrid" (1,8-naphthalinedicarboxylic acid anhydride), which is known as seed treatment safener for corn (maize) against damage by thiocarbamate herbicides, "fenclorim" (4,6-dichloro-2-phenylpyrimidine), which is known as seed treatment safener in sown rice against damage by pretilachlor, "flurazole" (benzyl-2-chloro-4-trifluoromethyl-1,3-thiazol-5-carboxylate), which is known as seed treatment safener for sorghum against damage by alachlor and metolachlor, "CL 304415" (CAS-Reg. No. 31541-57-8), (4-carboxy-3,4-dihydro-2H-1-benzopyran-4-acetic acid) of American Cyanamid, which is known as safener for corn (maize) against damage by imidazolinones, "MG 191" (CAS-Reg. No. 96420-72-3) (2-dichloromethyl-2-methyl-1,3-dioxolane) of Nitrokemia, known as safener for corn (maize), "MG-838" (CAS-Reg. No. 133993-74-5), (2-propenyl 1-oxa-4-azaspiro-[4.5]-decane-4-carbodithioate) of Nitrokemia, "Disulfoton" (O,O-diethyl-S-2-ethylthioethyl phosphorodithioate), "dietholate" (O,O-diethyl-O-phenylphosphorothioate), "mephenate" (4-chlorophenyl-methylcarbamate).
(14) Compounds, which besides herbicidal activity als exhibit Safener activity in crops like rice, e.g. "Dimepiperate" or "MY-93" (*S*-1-methyl-1-phenylethyl-piperidin-1-carbothioate), which is known as safener for rice against damage by molinate, "daimuron" or "SK 23" [1-(1-methyl-1-phenylethyl)-3-*p*-tolyl-urea], which is known as safener for rice against damage by imazosulfuron, "cumyluron" = "JC-940" [3-(2-chlorophenylmethyl)-1-(1-methyl-1-phenyl-ethyl)urea] (cf. JP-A 60-087254), which is known as safener for rice against damage by some herbicides, "methoxyphenon" or "NK 049" (3,3'-dimethyl-4-methoxy-benzophenone), which is known as safener for rice against damage by some herbicides, "CSB" [1-bromo-4-(chloromethylsulfonyl)benzene] of Kumiai (CAS-Reg. No. 54091-06-4), which is known as safener for rice against damage by some herbicides.
(15) Compounds, which are mainly used as herbicides, but which exhibit also safener activity on some crops, e.g. (2,4-dichlorophenoxy)acetic acid (2,4-D), (4-chlorophenoxy)acetic acid, (R,S)-2-(4-chlor-o-tolyloxy)propionic acid (mecoprop), 4-(2,4-dichlorophenoxy)butyric acid (2,4-DB), (4-chloro-o-tolyloxy)acetic acid (MCPA), 4-(4-chloro-*o*-tolyloxy)butyric acid, 4-(4-chlorophenoxy)butyric acid, 3,6-dichloro-2-methoxybenzoic acid (dicamba), 1-(ethoxycarbonyl)ethyl-3,6-dichloro-2-methoxybenzoate (lactidichlor- ethyl).

Particularly preferred examples of safeners are dichlorophenylpyrazolin-3-carboxylic acid derivatives, e.g. 1-(2,4-dichlorophenyl)-5-(ethoxycarbonyl)-5-methyl-4,5-dihydro-1H-pyrazole-3-carboxylic acid, diethyl 1-(2,4-dichlorophenyl)-4,5-dihydro-5-methyl-1H-pyrazole-3,5-dicarboxylate ("mefenpyr-diethyl"), and similar compounds known from WO 91/07874. Most preferred examples of safeners is mefenpyr-diethyl. Examples of plant growth regulators which may be mentioned are chlormequat chlorure, chlorocholine chloride and ethephon.

Plant nutrients that can be given as examples include typical inorganic or organic fertilizers for supplying macronutrients and/or micronutrients to plants. Examples include nitrogenous fertilizers, phosphatic fertilizers, and potassic fertilizers, as well as fertilizers containing calcium, magnesium, sulfur, iron, trace elements, silicon, and other plant-essential elements.

Biopesticides that can be given as examples include yeasts and bacteria; e.g., *Metschnikowia fructicola* or *bacillus firmus.*

In the present invention, the agrochemical active ingredient can be set within a range of 0.05-30 wt.%, and preferably 0.1-20 wt.%, and more preferably 0.2-10 wt.% of the granular agrochemical composition.

In a preferred embodiment of the present invention the granular agrochemical composition may contain two, three or four different active ingredients which could be selected from each of the four different catogeries given in Table 1.

**Table 1: Categories of mixing compounds**

| **Category 1** | **Category 2** | **Category 3** | **Category 4** |
|---|---|---|---|
| benfuracarb | cartap | azoxystrobin | furametpyr |
| carbosulfan | chlorantraniliprole | carpropamid | penflufen |
| clothianidin | cyantraniliprole | diclocymet | simeconazole |
| dinotefuran | cyclaniliprole | isoprothiolane | thifluzamide |
| ethiprole | fipronil | orysastrobin | |
| flupyradifurone | pymetrozine | probenazole | |
| imidacloprid | spinetoram | tiadinil | |
| thiacloprid | spinosad | tolprocarb | |
| thiamethoxam | tetranilprole | tricyclazole | |
| | triflumezopyrim | isotianil | |

Most preferred are the combinations of different active ingredients given in Table 2:

**Table 2: Most preferred combinations**

| **Number** | **Agrochemical active compound mixture** | | | |
|---|---|---|---|---|
| 1 | imidacloprid | isotianil | | |
| 2 | imidacloprid | isotianil | penflufen | |
| 3 | imidacloprid | isotianil | penflufen | spinosad |
| 4 | imidacloprid | isotianil | spinosad | |
| 5 | imidacloprid | isotianil | spinosad | thifluzamide |
| 6 | imidacloprid | isotianil | cyantraniliprole | |
| 7 | imidacloprid | isotianil | cyantraniliprole | penflufen |
| 8 | imidacloprid | isotianil | chlorantraniliprole | |
| 9 | imidacloprid | isotianil | chlorantraniliprole | penflufen |
| 10 | imidacloprid | isotianil | chlorantraniliprole | ethiprole |
| 11 | imidacloprid | isotianil | fipronil | |
| 12 | imidacloprid | isotianil | fipronil | penflufen |
| 13 | imidacloprid | tiadinil | | |
| 14 | imidacloprid | tiadinil | penflufen | |
| 15 | imidacloprid | tricyclazole | | |
| 16 | imidacloprid | tricyclazole | penflufen | |
| 17 | imidacloprid | tricyclazole | spinosad | |
| 18 | imidacloprid | probenazole | | |
| 19 | imidacloprid | probenazole | penflufen | |
| 20 | imidacloprid | penflufen | | |
| 21 | flupyradifurone | isotianil | | |
| 22 | flupyradifurone | isotianil | penflufen | |
| 23 | flupyradifurone | isotianil | penflufen | spinosad |
| 24 | flupyradifurone | isotianil | spinosad | |
| 25 | flupyradifurone | isotianil | spinosad | thifluzamide |
| 26 | flupyradifurone | isotianil | cyantraniliprole | |
| 27 | flupyradifurone | isotianil | cyantraniliprole | penflufen |
| 28 | flupyradifurone | isotianil | chlorantraniliprole | |
| 29 | flupyradifurone | isotianil | chlorantraniliprole | penflufen |
| 30 | flupyradifurone | isotianil | chlorantraniliprole | ethiprole |
| 31 | flupyradifurone | isotianil | fipronil | |
| 32 | flupyradifurone | isotianil | fipronil | penflufen |
| 33 | flupyradifurone | tiadinil | | |
| 34 | flupyradifurone | tiadinil | penflufen | |
| 35 | flupyradifurone | tricyclazole | | |
| 36 | flupyradifurone | tricyclazole | penflufen | |
| 37 | flupyradifurone | tricyclazole | spinosad | |
| 38 | flupyradifurone | probenazole | | |
| 39 | flupyradifurone | probenazole | penflufen | |
| 40 | flupyradifurone | penflufen | | |
| 41 | thiacloprid | isotianil | | |
| 42 | thiacloprid | isotianil | penflufen | |
| 43 | tetranilprole | isotianil | | |
| 44 | tetranilprole | isotianil | penflufen | |
| 45 | ethiprole | isotianil | | |
| 46 | ethiprole | isotianil | penflufen | |
| 47 | triflumezopyrim | isotianil | | |
| 48 | triflumezopyrim | isotianil | penflufen | |
| 49 | cartap | isotianil | penflufen | |
| 50 | carbosulfan | isotianil | penflufen | |
| 51 | clothianidin | isotianil | | |
| 52 | clothianidin | isotianil | penflufen | |
| 53 | chlorantraniliprole | isotianil | penflufen | |
| 54 | cyantraniliprole | isotianil | penflufen | |
| 55 | dinotefuran | isotianil | penflufen | |
| 56 | spinetoram | isotianil | penflufen | |
| 57 | spinosad | isotianil | penflufen | |
| 58 | thiacloprid | isotianil | penflufen | |
| 59 | thiamethoxam | isotianil | penflufen | |
| 60 | pymetrozine | isotianil | penflufen | |
| 61 | fipronil | isotianil | penflufen | |
| 62 | benfuracarb | isotianil | penflufen | |

The swelling agent in the present invention is a substance that increases in volume by absorbing water, and releases an agrochemical from inside a granular formulation as a result. Generally, coating granulation involves mixing a swelling agent together with an agrochemical and bonding the mixture to the surface of granular silica sand, granular calcium carbonate, or another carrier, or bonding the agrochemical to the surface of the carrier and then bonding the swelling agent to the surface thereof. Alternatively, extrusion granulation involves mixing together a carrier, an agrochemical or the like, and a swelling agent and molding the mixture by extruding granulation, or bonding the swelling agent to a granular formulation obtained by molding the carrier and the agrochemical or the like by extruding granulation. Specific examples of the swelling agent include bentonite, starch, and water-absorbent polymers. Sodium bentonite is preferred as a bentonite. Examples of the starch include corn starch, potato starch, methyl starch, and carboxymethyl starch. Examples of water-absorbent polymers include cellulose-based polymers, polyvinyl alcohol, sodium polyacrylic acid, cross-linked polyacrylate, starch-polyacrylate, isobutylene-maleate, PVA-polyacrylate, and the like. Bentonite or water-absorbent polymers (particularly sodium polyacrylic acid, cross-linked polyacrylate, starch-polyacrylate, isobutylene-maleate, or PVA-polyacrylate) are preferred as the swelling agent. Most preferred swelling agents are sodium bentonite, e.g. Kunigel V1, Kunigel V2, Kunipia G and Kunipia F (Kunimine Industries Co., LTD). These swelling agents can be used independently or in a plurality, and there is no particular limitation as to the type or combination of types thereof. The swelling agent is typically compounded in an amount of 0.1-80 wt.%, and preferably 0.2-70 wt.% and more preferably 1-60 wt.% depending on the swelling power with respect to the total weight of the granular agrochemical composition. For sodium bentonite 20-60 wt.% is preferred

Examples of the other formulants in the present invention include solid diluents. Specific examples include clay, finely powdered pumice, fired diatomaceous earth, kaolin, talc, acid clay, calcium carbonate, and other minerals. The solid diluents can be set within a range of 1-70 wt.%, and preferably 5-60 wt.%, and more preferably 10-50 wt% with respect to the total weight of the granular agrochemical composition.

Examples of the other formulants in the present invention include binders for use in primary granules.

A binder can be used in order to impart a degree of hardness to the primary granules obtained from extruding granulation, or in order to mold the granular formulation as necessary.

Specific examples of the binder include: hydroxypropyl cellulose; carboxymethyl cellulose; PVA; and glucose, lactose, fructose, mannitol, sucrose, dextrin, and other sugars and preferably hydroxypropyl cellulose; carboxymethyl cellulose; PVA; dextrin, and more preferably carboxymethyl cellulose; and dextrin. However, these examples are not given by way of any limitation; the binders can be used independently, or can be used in a combination of two or more.

The binder content can be set within a range of 0.1-10 wt.%, and preferably 0.2-5 wt.%, and more preferably 0.5-5 wt.% with respect to the total weight of the granular agrochemical composition.

Examples of the surfactant for use in the primary granules in the present invention can be selected from non-ionic surfactants, anionic surfactants, amphoteric surfactants and cationic surfactants.

Suitable non-ionic surfactants or dispersing aids a) are all substances of this type which can customarily be employed in agrochemical agents. Preferably polyoxyethylene alkanediol, polyethylene oxide-polypropylene oxide block copolymers, polyethylene glycol ethers of branched or linear alcohols, reaction products of fatty acids or fatty acid alcohols with ethylene oxide and/or propylene oxide, furthermore polyvinyl alcohol, polyoxyalkylenamine derivatives, polyvinylpyrrolidone, copolymers of polyvinyl alcohol and polyvinylpyrrolidone, and copolymers of (meth)acrylic acid and (meth)acrylic acid esters, furthermore branched or linear alkyl ethoxylates and alkylaryl ethoxylates, where polyethylene oxide-sorbitan fatty acid esters may be mentioned by way of example. Out of the examples mentioned above selected classes can be optionally phosphated and neutralized with bases.

Possible anionic surfactants are all substances of this type which can customarily be employed in agrochemical agents. Alkali metal, alkaline earth metal and ammonium salts of alkylsulphonic or alkylphospohric acids as well as alkylarylsulphonic or alkylarylphosphoric acids are preferred. A further preferred group of anionic surfactants or dispersing aids are alkali metal, alkaline earth metal and ammonium salts of polystyrenesulphonic acids, salts of polyvinylsulphonic acids, salts of alkylnaphthalene sulphonic acids, salts of naphthalenesulphonic acid-formaldehyde condensation products, salts of condensation products of naphthalenesulphonic acid, phenolsulphonic acid and formaldehyde, salts of polyoxyalkylene arylphenyl ether sulphonic acid, salts of polyoxyethylene dodecylether carboxylic acid, salts of alkyl sulfosuccinate and salts of lignosulphonic acid.

Possible amphoteric surfactants are all substances of this type which can customarily be employed in agrochemical agents. Aliphatic alkyl betaine and alkylammonium salt are preferred.

Possible cationic surfactants surfactants are all substances of this type which can customarily be employed in agrochemical agents. Alkylpyridinium salt and polyethylene polyamine fatty acid amide are preferred.

**Table 3: Exemplified trade names and CAS-No's of preferred compounds a)**

| **Tradename** | **Company** | **General description** | **CAS**- **No.** |
|---|---|---|---|
| Morwet^{®} D-425 | Akzo Nobel | Naphthalene sulphonate formaldehyde condensate Na salt | 9008-63-3 |
| Triton^{®} GR 7 ME | Dow | dioctylsulfosuccinate sodium salt | 577-11-7 |
| Rhodacal^{®} 60/BE | Solvay | CaDBS (60%) in ethylhexanol | 26264-06-2 |
| Tanemul^{®} 1372RM | Levaco | CaDBS (30-50%) in RME | 26264-06-2 |
| Soprophor^{®} 4D384 | Solvay | tristyrylphenol ethoxylate (16EO) sulphate ammonium salt | 119432-41-6 |
| Soprophor^{®} 3D33 | Solvay | tristyrylphenol ethoxylate (16EO) phosphate | 90093-37-1 |
| Soprophor^{®} FLK | Solvay | Poly(oxy-1.2-ethanediyl), alpha.-2.4.6-tris(1-phenylethyl)phenyl-.omega.-hydroxy-, phosphate, potassium salt | 163436-84-8 |
| Supragil^{®} WP | Solvay | Sodium diisopropylnaphthalenesulphonate | 1322-93-6 |
| Reax^{®} 88A | Borregaard LignoTech | Lignosulfonic acid, sodium salt | 68512-34-5 |
| Borresperse^{®} NA | Borregaard LignoTech | Lignosulfonic acid, sodium salt | 8061-51-6 |
| SanX^{®}P252 | Nippon Paper Chemical | Lignosulfonic acid, sodium salt | 8061-51-6 |
| Vanilex^{®} N | Nippon Paper Chemical | Lignosulfonic acid, sodium salt | 8061-51-6 |
| Neocol^{®} SW-CP | Daiichi Kogyo Seiyaku | dioctylsulfosuccinate sodium salt | 577-11-7 |
| Newkalgen^{®} FS-7S | Takemoto oil & fat | Polyoxyalkylene arylphenyl ether sulphonic acid, sodium salt | 128282-33-7 |
| Newkalgen^{®} FS-700SW | Takemoto oil & fat | Polyoxyalkylene arylphenyl ether sulphonic acid, sodium salt | 128282-33-7 |
| Newkalgen^{®} FS-700PG | Takemoto oil & fat | Polyoxyalkylene arylphenyl ether sulphonic acid, ammonium salt | 119419-11-3 |
| Newkalgen^{®} TG 310 | Takemoto oil & fat | Polyoxyethylene alkanediol | 143607-17-4 |
| Beaulight^{®} LCA-30D | Sanyo Chemical | Sodium polyoxyethylene dodecylether carboxylate | 33939-64-9 |
| Synperonic^{®} A3 | Croda | alcohol ethoxylate (C12/C15-EO3) | 68131-39-5 |
| Synperonic^{®} A7 | Croda | alcohol ethoxylate (C12/C15-EO7) | 68131-39-5 |
| Synperonic^{®} PE/F127 | Croda | block-copolymer of polyethylene oxide and polypropylene oxide | 9003-11-6 |
| Atlox^{®} 4914. | Croda | Non-ionic random copolymer | |
| Atlox^{®} 4912 | Croda | block-copolymer of polyethylene oxide and polyhydroxystearic acid | |
| Dispersogen^{®} LFH | Clariant | tristyrylphenol ethoxylate (20EO) phosphate | 114535-82-9 |

Further additives b) which can optionally be contained in the formulations according to the invention are penetration promoters, wetting agents, spreading agents and/or retention agents. Suitable are all substances which can customarily be employed in agrochemical agents for this purpose.

Suitable examples for additives b) are
- ethoxylated branched alcohols (e.g. Genapol^{®} X-type) with 2-20 EO units;
- methyl end-capped, ethoxylated branched alcohols (e.g. Genapol^{®} XM-type) comprising 2-20 EO units;
- ethoxylated coconut alcohols (e.g. Genapol^{®} C-types) comprising 2-20 EO units;
- ethoxylated C12/15 alcohols (e.g. Synperonic^{®} A-types) comprising 2-20 EO units;
- propoxy-ethoxylated alcohols, branched or linear, e.g. Antarox^{®} B/848, Atlas^{®} G5000, Lucramul^{®} HOT 5902;
- propoxy-ethoxylated fatty acids, Me end-capped, e.g. Leofat^{®} OC0503M;
- organomodified polysiloxanes, e.g. BreakThru^{®} OE444, BreakThru^{®} S240, Silwett^{®} L77, Silwett^{®} 408;
- mono-and diesters of sulfosuccinate Na salts with branched or linear alcohols comprising 1-10 carbon atoms;
- ethoxylated diacetylene-diols (e.g. Surfynol^{®} 4xx-range).

**Table 4: Exemplified trade names and CAS-No's of preferred compounds b)**

| **Tradename** | **Company** | **General description** | **CAS**- **No.** |
|---|---|---|---|
| Lucramul^{®} HOT 5902 | Levaco | alcohol ethoxylate-propoxylate (C8-PO8/E06) | 64366-70-7 |
| Genapol^{®} X060 | Clariant | alcohol ethoxylate (iso-C13-EO6) | 9043-30-5 |
| Genapol^{®} XM 060 | Clariant | alcohol ethoxylate (iso-C13-EO6/Me capped) | 345642-79-7 |
| Triton^{®} GR 7 ME | Dow | dioctylsulfosuccinate sodium salt | 577-11-7 |
| BreakThru^{®} OE 444 | Evonik Industries | Siloxanes and Silicones, cetyl Me, di-Me | 191044-49-2 |
| BreakThru^{®} S240 | Evonik Industries | polyether modified trisiloxane | 134180-76-0 |
| Silwett^{®} L77 | Momentive | Polyalkyleneoxide modified heptamethyltrisiloxane | 67674-67-3 |
| Silwett^{®} 408 | Momentive | Polyalkyleneoxide modified heptamethyltrisiloxane | 67674-67-3 |
| Antarox^{®} B/848 | Solvay | Oxirane, methyl-, polymer with oxirane, monobutyl ether | 9038-95-3 |
| Atlas^{®} G5000 | Croda | Oxirane, methyl-, polymer with oxirane, monobutyl ether | 9038-95-3 |
| Leofat^{®} OC-0503M | Lion Chemical, JP | Oxirane, methyl-, polymer with oxirane, mono-(9Z)-9-octadecenoate, methyl ether, block | 181141-31-1 |
| Surfynol^{®} 440 | Air Products | 2.4.7.9-Tetramethyldec-5-yne-4.7-diol, ethoxylated | 9014-85-1 |

The surfactant content can be set within a range of 0.005-10 wt.%, and preferably 0.01-5 wt.%, and more preferably 0.1-5 wt.% with respect to the total weight of the granular agrochemical composition.

Examples of the hydrophobic substance for use in the coating include calcium stearate, magnesium stearate, and aluminum stearate; calcium stearate is preferred.

The hydrophobic-substance content can be set within a range of 0.5-30 wt.%, and preferably 1-25 wt.%, and more preferably 2-20 wt.% with respect to the total weight of the granular agrochemical composition.

The carrier for use in the coating in the present invention is a chemically inert powder substance that is mixed with the hydrophobic substance, or that can have hydrophilic properties imparted to the surface thereof after coating of the hydrophobic substance; examples of the carrier include clay, finely powdered pumice, fired diatomaceous earth, kaolin, talc, acid clay, bentonite, and calcium carbonate. Calcium carbonate, bentonite, talc, and clay are preferred as the carrier. In a preferred embodiment the carrier is coated with the binder.

The binder according to the invention is either a polyurethane resin obtained by reacting a polyisocyanate compound and a polyol compound, or a polyurea resin obtained by reacting a polyisocyanate compound and a polyamine compound.

Examples of the polyisocyanate compound in the present invention include: toluene diisocyanate (also referred to as "TDI"); diphenylmethane diisocyanate (also referred to as "MDI"), polymethylene polyphenyl polyisocyanate (polymeric MDI), xylylene diisocyanate (XDI), and other aromatic polyisocyanates;, hexamethylene diisocyanate (HDI), and other aliphatic polyisocyanates; isophorone diisocyanate (IPDI), 1,4-Cyclohexyldiisocyanat (CHDI), and other alicyclic polyisocyanates; as well as mixtures thereof. Preferred polyisocyanate compounds in the present invention are MDI- and HDI-based polyisocyanates.

Examples of the polyol compound in the present invention include polyether polyols, polyester polyols, polybutandiene polyols, polycarbonate polyols, polycaprolactone polyols, polysulfide polyols, natural oil polyols e.g. castor-oil-based (triglyceride-based) polyols, and the like as well as mixtures thereof. Preferred polyol compound in the present invention are polyether polyols (e.g. Toho polyol PE-555) and castor-oil-based (triglyceride-based) polyols.

Examples of the polyamine compound in the present invention include: hexamethylene diamine (HMD), diethylene triamine (DETA), triethylene tetramine (TETA), polyaspartic acid esters and other aliphatic polyamines, diethyl toluylene diamine, 4,4' -methylene-bis(2-chloro aniline) (MbOCA) and other aromatic amines as well as mixtures thereof. Preferred polyamine compound in the present invention are polyaspartic acid esters.

The binder content can be set within a range of 0.1-10 wt.%, and preferably 0.2-5 wt.%, and more preferably 0.5-5 wt.% with respect to the total weight of the granular agrochemical composition. In order to prevent aggregation during granulation, the binder is added such that the total amount thereof does not exceed the amount of the hydrophobic substance or the carrier. An appropriate amount should be coated because aggregation occurs when the amount of the binder is too high, and the hydrophobic substance and the carrier are not sufficiently coated when the amount of the binder is low.

The binder can be added in an order such that: the polyisocyanate is added after the polyol or polyamine is added; the polyisocyanate is added before the polyol or polyamine is added; or the polyol or polyamine and the polyisocyanate are added at the same time separately or after having been mixed together in advance.

There is no particular limitation as to the OH equivalent weight of the polyol or polyamine used in the present invention; a value within a range of 50-1000, and preferably 100-700 and more preferably 100-400, can be selected.

There is no particular limitation as to the NCO equivalent weight of the polyisocyanate used in the present invention; a value within a range of 50-1,000, and preferably 100-700, and more preferably 100-400 can be selected.

There is no particular limitation as to the mixing ratio of the polyol and polyisocyanate or the polyamine and polyisocyanate; however, it is preferable to mix these substances such that the OH equivalent weight and NCO equivalent weight are equal, or such that the NCO equivalent weight is greater.

In the coating process of the present invention, repeatedly performing coating using the binder and the hydrophobic substance in alternating fashion, or charging the hydrophobic substance while spraying the binder, makes it possible to perform coating while avoiding aggregation.

In the coating process of the present invention, repeatedly performing coating using the binder and the carrier in alternating fashion, or charging the carrier while spraying the binder, makes it possible to perform coating while avoiding aggregation.

The primary granules according to the present invention are prepared by: granulating a mixture of an agrochemical active ingredient, a swelling substance, and, depending on the circumstances, a carrier, and a surfactant, and the other formulants using an extruding granulator; sizing and forming the primary granule into spheroids using a spheronizer; and performing drying. It is unnecessary for the primary granules to be perfectly spheroidal; long primary granules are also permitted.

Next, the hydrophobic substance or a mixture of the hydrophobic substance and the carrier is coated on the surface using the binder. The binder is added such that the amount thereof does not exceed that of the hydrophobic substance and such that aggregation does not occur. Optimizing the amount of the binder makes it possible to maintain the flowability of the primary granules and avoid aggregation, resulting in a high recovery rate. Maintaining the flow properties obviates the need for heating in the coating step.

Such "powder coating" can be performed using powder coating-granulation through a tumbling- or centrifugal--tumbling-type granulator/mixer or the like.

When hydrophilicity is to be imparted to the surface of the granular agrochemical composition of the present invention, coating may be performed in continuation using the carrier. In this case as well, optimizing the amount of the binder makes it possible to maintain the flowability of the granules and avoid aggregation, resulting in a high recovery rate. Optimizing the mixing ratio of the binder and the carrier obviates the need for heating in the coating step. There are also cases when heating is performed after coating, as necessary, using a temperature and period of time that are sufficient for forming polyurethane or polyurea.

The timed-release-type granular agrochemical composition of the present invention can control the amount of agrochemical active ingredients released from the composition to 0% or less than 5 % of the whole amount of that in the composition in the period in which releasing of the ingredients is suppressed, after an application of the composition and, in the following period in which the ingredients is released, can start releasing the agrochemical active compound at the same time of the breakup of the surface of the composition by swelling of the primary granules and can immediately release the ingredients.

The release curve of the agrochemical active ingredients of the timed-release-type granular agrochemical composition of the present invention is observed as like sigmoid type's curve as a whole.

The length of the aforementioned period in which releasing of the compounds is suppressed and the following period in which the compound is released can be occasionally configured by changing species and/or amount of an agrochemical active compound, a swelling substance, a surfactant, a carrier, a binder, a hydrophobic substance and/or the other formulants according to the purpose of use of and using conditions of the timed-release-type granular agrochemical composition of the present invention.

The length of the aforementioned period in which releasing of the ingredient is suppressed may be occasionally configured to, for examples, the period within 60 days after the application of the composition, or within 30 days, 10 days, 5 days or 3 days.

The length of the aforementioned period in which the ingredient is released may be occasionally configured to, for examples, the period within 90 days, or within 60 days, 30 days, 20 days, 10 days, 5 days or 3 days.

The inventive compositions have potent microbicidal activity and can be used for control of unwanted microorganisms, such as fungi and bacteria, in crop protection and in the protection of materials.

The invention also relates to a method for controlling unwanted microorganisms, characterized in that the inventive active ingredients are applied to the phytopathogenic fungi, phytopathogenic bacteria and/or their habitat.

Fungicides can be used in crop protection for control of phytopathogenic fungi. They are characterized by an outstanding efficacy against a broad spectrum of phytopathogenic fungi, including soilborne pathogens, which are in particular members of the classes *Plasmodiophoromycetes*, *Peronosporomycetes* (Syn. *Oomycetes*), *Chytridiomycetes*, *Zygomycetes, Ascomycetes*, *Basidiomycetes* and *Deuteromycetes* (Syn. *Fungi imperfecti*). Some fungicides are systemically active and can be used in plant protection as foliar, seed dressing or soil fungicide. Furthermore, they are suitable for combating fungi, which inter alia infest wood or roots of plant.

Bactericides can be used in crop protection for control of *Pseudomonadaceae*, *Rhizobincene, Enterobacteriaceae*, *Corynebacteriaceae* and *Streptomycetaceae.*

Non-limiting examples of pathogens of fungal diseases which can be treated in accordance with the invention include:
diseases caused by powdery mildew pathogens, for example *Blumeria* species, for example *Blumeria graminis; Podosphaera* species, for example *Podosphaera leucotricha; Sphaerotheca* species, for example *Sphaerotheca fuliginea; Uncinula* species, for example *Uncinula necator;*
diseases caused by rust disease pathogens, for example *Gymnosporangium* species, for example *Gymnosporangium sabinae; Hemileia* species, for example *Hemileia vastatrix; Phakopsora* species, for example *Phakopsora pachyrhizi* and *Phakopsora meibomiae; Puccinia* species, for example *Puccinia recondite, P. triticina, P. graminis* or *P. striiformis; Uromyces* species, for example *Uromyces appendiculatus;*
diseases caused by pathogens from the group of the *Oomycetes*, for example *Albugo* species, for example *Algubo candida; Bremia* species, for example *Bremia lactucae; Peronospora* species, for example *Peronospora pisi* or *P. brassicae;* Phytophthora species, for example *Phytophthora infestans; Plasmopara* species, for example *Plasmopara viticola; Pseudoperonospora* species, for example *Pseudoperonospora humuli* or *Pseudoperonospora cubensis;* Pythium species, for example *Pythium ultimum;*
leaf blotch diseases and leaf wilt diseases caused, for example, by *Alternaria* species, for example *Alterniaria solani; Cercospora* species, for example *Cercospora beticola; Cladiosporium* species, for example *Cladiosporium cucumerinum; Cochliobolus* species, for example *Cochliobolus sativus* (conidia form: Drechslera, Syn: Helminthosporium), *Cochliobolus miyabeanus; Colletotrichum* species, for example *Colletotrichum lindemuthanium; Cycloconium* species, for example *Cycloconium oleaginum; Diaporthe* species, for example *Diaporthe citri; Elsinoe* species, for example *Elsinoe fawcettii; Gloeosporium* species, for example *Gloeosporium laeticolor; Glomerella* species, for example *Glomerella cingulata; Guignardia* species, for example *Guignardia bidwelli; Leptosphaeria* species, for example *Leptosphaeria maculans*, *Leptosphaeria nodorum; Magnaporthe* species, for example *Magnaporthe grisea; Marssonia* species, for example *Marssonia coronaria; Microdochium* species, for example *Microdochium nivale; Mycosphaerella* species, for example *Mycosphaerella graminicola, M. arachidicola* and *M.fijiensis; Phaeosphaeria* species, for example *Phaeosphaeria nodorum; Pyrenophora* species, for example *Pyrenophora teres, Pyrenophora tritici repentis; Ramularia* species, for example *Ramularia collo*-*cygni*, *Ramularia areola; Rhynchosporium* species, for example *Rhynchosporium secalis; Septoria* species, for example *Septoria apii, Septoria lycopersii; Typhula* species, for example *Typhula incarnata; Venturia* species, for example *Venturia inaequalis;*
root and stem diseases caused, for example, by *Corticium* species, for example *Corticium graminearum; Fusarium* species, for example *Fusarium oxysporum; Gaeumannomyces* species, for example *Gaeumannomyces graminis; Rhizoctonia* species, such as, for example *Rhizoctonia solani; Sarocladium* diseases caused for example by *Sarocladium oryzae; Sclerotium* diseases caused for example by *Sclerotium oryzae; Tapesia* species, for example *Tapesia acuformis; Thielaviopsis* species, for example *Thielaviopsis basicola;*
ear and panicle diseases (including corn cobs) caused, for example, by *Alternaria* species, for example *Alternaria* spp.; *Aspergillus* species, for example *Aspergillus flavus; Cladosporium* species, for example *Cladosporium cladosporioides; Claviceps* species, for example *Claviceps purpurea; Fusarium* species, for example *Fusarium culmorum; Gibberella* species, for example *Gibberella zeae; Monographella* species, for example *Monographella nivalis; Septoria* species, for example *Septoria nodorum;*
diseases caused by smut fungi, for example *Sphacelotheca* species, for example *Sphacelotheca reiliana; Tilletia* species, for example *Tilletia caries, T. controversa; Urocystis* species, for example *Urocystis occulta; Ustilago* species, for example *Ustilago nuda, U. nuda tritici;*
fruit rot caused, for example, by *Aspergillus* species, for example *Aspergillus flavus; Botrytis* species, for example *Botrytis cinerea; Penicillium* species, for example *Penicillium expansum* and *P*. *purpurogenum; Sclerotinia* species, for example *Sclerotinia sclerotiorum; Verticilium* species, for example *Verticilium alboatrum;*
seed and soilborne decay, mould, wilt, rot and damping-off diseases caused, for example, by *Alternaria* species, caused for example by *Alternaria brassicicola; Aphanomyces* species, caused for example by *Aphanomyces euteiches; Ascochyta* species, caused for example by *Ascochyta lentis; Aspergillus* species, caused for example by *Aspergillus flavus; Cladosporium* species, caused for example by *Cladosporium herbarum; Cochliobolus* species, caused for example by *Cochliobolus sativus;* (Conidiaform: Drechslera, Bipolaris Syn: Helminthosporium); *Colletotrichum* species, caused for example by *Colletotrichum coccodes; Fusarium* species, caused for example by *Fusarium culmorum; Gibberella* species, caused for example by *Gibberella zeae; Macrophomina* species, caused for example by *Macrophomina phaseolina; Monographella* species, caused for example by *Monographella nivalis; Penicillium* species, caused for example by *Penicillium expansum; Phoma* species, caused for example by *Phoma lingam; Phomopsis* species, caused for example by *Phomopsis sojae; Phytophthora* species, caused for example by *Phytophthora cactorum; Pyrenophora* species, caused for example by *Pyrenophora graminea; Pyricularia* species, caused for example by *Pyricularia oryzae; Pythium* species, caused for example by *Pythium ultimum; Rhizoctonia* species, caused for example by *Rhizoctonia solani; Rhizopus* species, caused for example by *Rhizopus oryzae; Sclerotium* species, caused for example by *Sclerotium rolfsii; Septoria* species, caused for example by *Septoria nodorum; Typhula* species, caused for example by *Typhula incarnata; Verticillium* species, caused for example by *Verticillium dahliae;*
cancers, galls and witches' broom caused, for example, by *Nectria* species, for example *Nectria galligena;*
wilt diseases caused, for example, by *Monilinia* species, for example *Monilinia laxa;*
leaf blister or leaf curl diseases caused, for example, by *Exobasidium* species, for example *Exobasidium vexans;*
*Taphrina* species, for example *Taphrina deformans;*
decline diseases of wooden plants caused, for example, by Esca disease, caused for example by *Phaemoniella clamydospora*, *Phaeoacremonium aleophilum* and *Fomitiporia mediterranea;* Eutypa dyeback, caused for example by *Eutypa lata* ; Ganoderma diseases caused for example by *Ganoderma boninense;* Rigidoporus diseases caused for example by *Rigidoporus liguosus;*
diseases of flowers and seeds caused, for example, by *Botrytis* species, for example *Botrytis cinerea;* diseases of plant tubers caused, for example, by *Rhizoctonia* species, for example *Rhizoctonia solani; Helminthosporium* species, for example *Helminthosporium solani;*
Club root caused, for example, by *Plasmodiophora* species, for example *Plamodiophora brassicae;*
diseases caused by bacterial pathogens, for example *Xanthomonas* species, for example *Xanthomonas campestris pv*. *oryzae; Pseudomonas* species, for example *Pseudomonas syringae pv. lachrymans; Erwinia* species, for example *Erwinia amylovora*.

The following diseases of soya beans can be controlled with preference:
Fungal diseases on leaves, stems, pods and seeds caused, for example, by *Alternaria* leaf spot (*Alternaria spec. atrans tenuissima*), Anthracnose (*Colletotrichum gloeosporoides dematium var. truncatum),* brown spot (*Septoria glycines*)*,* cercospora leaf spot and blight (*Cercospora kikuchii*), choanephora leaf blight (*Choanephora infundibulifera trispora* (Syn.)), dactuliophora leaf spot (*Dactuliophora glycines*), downy mildew (*Peronospora manshurica*), drechslera blight (*Drechslera glycini*), frogeye leaf spot (*Cercospora sojina*), leptosphaerulina leaf spot (*Leptosphaerulina trifolii*), phyllostica leaf spot (*Phyllosticta sojaecola*), pod and stem blight (*Phomopsis sojae*), powdery mildew (*Microsphaera diffusa*)*,* pyrenochaeta leaf spot (*Pyrenochaeta glycines*), rhizoctonia aerial, foliage, and web blight (*Rhizoctonia solani*), rust (*Phakopsora pachyrhizi*, *Phakopsora meibomiae*), scab (*Sphaceloma glycines*), stemphylium leaf blight (*Stemphylium botryosum*), target spot (*Corynespora cassiicola*)*.*

Fungal diseases on roots and the stem base caused, for example, by black root rot (*Calonectria crotalariae),* charcoal rot (*Macrophomina phaseolina*), fusarium blight or wilt, root rot, and pod and collar rot (*Fusarium oxysporum*, *Fusarium orthoceras, Fusarium semitectum*, *Fusarium equiseti*), mycoleptodiscus root rot (*Mycoleptodiscus terrestris*), neocosmospora (*Neocosmospora vasinfecta*)*,* pod and stem blight (*Diaporthe phaseolorum*), stem canker (*Diaporthe phaseolorum var*. *caulivora*)*,* phytophthora rot (*Phytophthora megasperma*)*,* brown stem rot *(Phialophora gregata),* pythium rot (*Pythium aphanidermatum, Pythium irregulare, Pythium debaryanum*, *Pythium myriotylum, Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*)*,* thielaviopsis root rot (*Thielaviopsis basicola*)*.*

The inventive fungicidal compositions can be used for curative or protective/preventive control of phytopathogenic fungi. The invention therefore also relates to curative and protective methods for controlling phytopathogenic fungi by the use of the inventive active ingredients or compositions, which are applied to the seed, the plant or plant parts, the fruit or the soil in which the plants grow.

The fact that the active ingredients are well tolerated by plants at the concentrations required for controlling plant diseases allows the treatment of above-ground parts of plants, of propagation stock and seeds, and of the soil.

According to the invention all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

The inventive active ingredients, when they are well tolerated by plants, have favourable homeotherm toxicity and are well tolerated by the environment, are suitable for protecting plants and plant organs, for enhancing harvest yields, for improving the quality of the harvested material. They can preferably be used as crop protection compositions. They are active against normally sensitive and resistant species and against all or some stages of development.

Plants which can be treated in accordance with the invention include the following main crop plants: maize, soya bean, alfalfa, cotton, sunflower, *Brassica* oil seeds such as *Brassica napus* (e.g. canola, rapeseed), *Brassica rapa, B. juncea* (e.g. (field) mustard) and *Brassica carinata, Arecaceae sp.* (e.g. oilpalm, coconut), rice, wheat, sugar beet, sugar cane, oats, rye, barley, millet and sorghum, triticale, flax, nuts, grapes and vine and various fruit and vegetables from various botanic taxa, e.g. *Rosaceae sp.* (e.g. pome fruits such as apples and pears, but also stone fruits such as apricots, cherries, almonds, plums and peaches, and berry fruits such as strawberries, raspberries, red and black currant and gooseberry), *Ribesioidae sp., Juglandaceae sp., Betulaceae sp., Anacardiaceae sp., Fagaceae sp., Moraceae sp., Oleaceae sp.* (e.g. olive tree), *Actinidaceae sp., Lauraceae sp.* (e.g. avocado, cinnamon, camphor), *Musaceae sp.* (e.g. banana trees and plantations), *Rubiaceae sp.* (e.g. coffee), *Theaceae sp.* (e.g. tea), *Sterculiceae sp., Rutaceae sp.* (e.g. lemons, oranges, mandarins and grapefruit); *Solanaceae sp.* (e.g. tomatoes, potatoes, peppers, capsicum, aubergines, tobacco), *Liliaceae sp., Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), *Chenopodiaceae sp.* (e.g. Swiss chard, fodder beet, spinach, beetroot), *Linaceae sp.* (e.g. hemp), *Cannabeacea sp.* (e.g. cannabis), *Malvaceae sp.* (e.g. okra, cocoa), *Papaveraceae* (e.g. poppy), *Asparagaceae* (e.g. asparagus); useful plants and ornamental plants in the garden and woods including turf, lawn, grass and *Stevia rebaudiana;* and in each case genetically modified types of these plants.

The compositions according to the invention covers a broad weed spectrum which is specific in particular for rice crops. From among the monocotyledonous weeds, genera such as, for example, Echinochloa spp., Panicum spp., Poa spp., Leptochloa spp., Brachiaria spp., Digitaria spp., Setaria spp. Cyperus spp., Monochoria spp., Fimbristylis spp., Sagittaria spp., Eleocharis spp., Scirpus spp., Alisma spp., Aneilema spp., Blyxa spp., Eriocaulon spp., Potamogeton spp. and the like are controlled well, in particular the species Echinochloa oryzicola, Monochoria vaginalis, Eleocharis acicularis, Eleocharis kuroguwai, Cyperus difformis, Cyperus serotinus, Sagittaria pygmaea, Alisma canaliculatum, Scirpus juncoides. In the case of the dicotyledonous weeds, the activity spectrum extends to genera such as, for example, Polygonum spp., Rorippa spp., Rotala spp., Lindernia spp., Bidens spp., Sphenoclea spp., Dopatrium spp., Eclipta spp., Elatine spp., Gratiola spp., Lindernia spp., Ludwigia spp., Oenanthe spp., Ranunculus spp., Deinostema spp. and the like. In particular species such as Rotala indica, Sphenoclea zeylanica, Lindernia procumbens, Ludwigia prostrate, Potamogeton distinctus, Elatine triandra, Oenanthe javanica are controlled well.

The present invention furthermore provides a method for the selective control of unwanted plants, preferably in crop plants, in particular in rice crops (planted or sown under upland or paddy conditions using indica and/or japonica species and/or hybrids/mutants/GMOs), which comprises applying the composition according to the invention to the plants (for example harmful plants, such as monocotyledonous or dicotyledonous broad-leaved weeds, weed grasses, Cyperaceae or unwanted crop plants), the seed (for example grains, seeds or vegetative propagation organs, such as tubers or shoot parts with buds) or to the area in which the plants grow (for example the area under cultivation, which may also be covered by water), for example together or separately. One of the herbicides may be applied before, after or simultaneously with the other herbicide to the plants, the seed or the area in which the plants grow (for example the area under cultivation).

Unwanted plants are to be understood as meaning all plants which grow in locations where they are unwanted. These can, for example, be harmful plants (for example monocotyledonous or dicotyledonous weeds, weed grasses, Cyperaceae or unwanted crop plants), including, for example, those which are resistant to certain herbicidally active compounds, such as glyphosate, glufosinate, atrazine, imidazolinone herbicides, sulfonylureas, (hetero)aryloxyaryloxyalkylcarboxylic acids or phenoxyalkylcarboxylic acids ('fops'), cyclohexanedione oximes ('dims') or auxin inhibitors.

The composition according to the invention is employed selectively for controlling unwanted vegetation, for example in crop plants such as farm crops, for example monocotyledonous farm crops, such as cereals (for example wheat, barley, rye, oats, rice, corn, millet), or dicotyledonous farm crops, such as sugar beet, sugar cane, oilseed rape, cotton, sunflowers and leguminous plants, for example of the genera Glycine (for example Glycine max. (soybean), such as non-transgenic Glycine max. (for example conventional cultivars, such as STS cultivars) or transgenic Glycine max. (for example RR-soybean or LL-soybean) and crossbreeds thereof), Phaseolus, Pisum, Vicia and Arachis, or vegetable crops from various botanical groups, such as potato, leek, cabbage, carrot, tomato, onion, in fruit plantations (plantation crops), greens, lawns and pasture areas, or on non-crop areas (for example squares of residential areas or industrial sites, rail tracks) in particular in rice crops (planted or sown under upland or paddy conditions using indica and japonica varieties and also hybrids/mutants/GMOs). The application is preferably carried out both prior to the emergence of the harmful plants and to the emerged harmful plants (for example broad-leaved weeds, weed grasses, Cyperaceae or unwanted crop plants), independently of the stage of the sown/planted crop.

The invention also provides the use of the composition according to the invention for selectively controlling unwanted vegetation, preferably in crop plants, in particular in rice crops (planted or sown under upland or paddy conditions using indica and japonica varieties and also hybrids/mutants/GMOs).

The present invention is exemplified by the following embodiment; however, this embodiment is not given by way of any limitation.

### [Examples]

### Example 1 (according to the invention)

2.0 wt.% of penflufen, 46.15 wt.% of bentonite (Kunigel® V2), 26.46 wt.% of clay (NK-300), and 2.31 wt.% of lignin (Borresperse® NA) were uniformly mixed. Water was added to the mixture, which was kneaded, and a dome granulator was used to granulate the kneaded mixture. The granulated substance was sized and formed into spheroids using a spheronizer. After drying at 80°C, the substance was sieved to a granular size of 0.85-1.7 mm to yield primary granules.

Using a centrifugal-tumbling-type granulator, a polyol (Toho® polyol PE-555; OH equivalent weight: 137), calcium stearate, a polyisocyanate (Hycel® 360P; NCO equivalent weight: 137), and calcium stearate were gradually added in the stated order to the resulting primary granules, and this process was repeated. Similarly, a polyol, talc, a polyisocyanate, and talc were gradually added in the stated order, and this process was repeated to form an outermost layer. Ultimately, 6.92 wt.% of calcium stearate, 12.46 wt.% of talc, 1.85 wt.% of the polyol, and 1.85 wt.% of the polyisocyanate were coated. No heating process was performed during coating. After coating, the granules were heated at 80°C for 40 minutes.

### Comparative Example 1

An attempt was made to perform the same coating process as that in Example 1 without using calcium stearate or talc; however, the granules aggregated during coating, and could not be prepared.

Granulation was impossible when manufacturing was performed according to the method disclosed in the aforementioned Japanese Laid-Open Patent Application 2003-183104.

### Comparative Example 2

The same coating process as that in embodiment 1 was performed using talc instead of calcium stearate.

### Definition of Timed Release

In the present invention, in order to distinguish a "timed-release-type granular agrochemical composition" from a "simple sustained-release agrochemical composition," these terms are defined as described below.

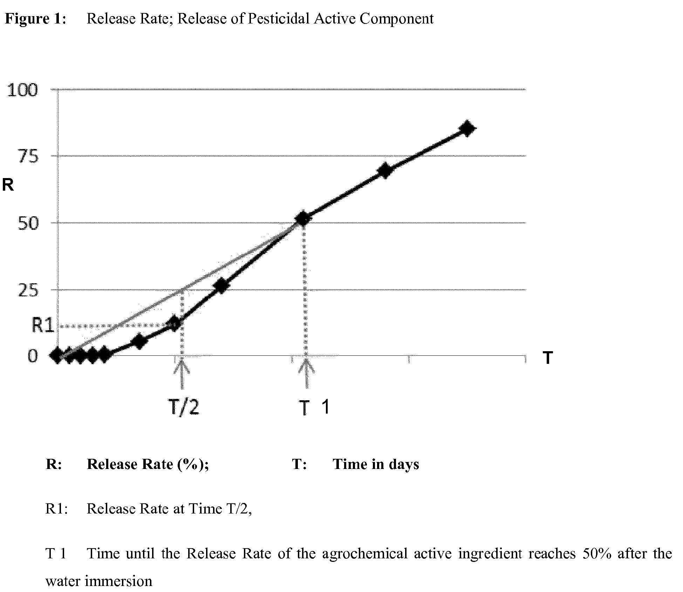

The timed-release-type granular agrochemical composition according to the present invention was immersed in water, and was defined as a simple sustained-release agrochemical composition when R1 > 25%, and as a timed-release-type granular agrochemical composition when R1 < 25% (or preferably R1 < 20%), where R1 is the release rate at time T/2, and T is the time until the release rate of the agrochemical active ingredient reaches 50% after the water immersion (see Figure 1).

### Immersion Release Test

Approximately 50 mg of each of the compositions of embodiment 1 and Comparative Example 2 was treated in a release testing device (Hi-PACK; manufactured by Entec Inc.) into which 1,250 mL of tap water had been introduced, and the composition samples were maintained at 25°C. Over time, the agrochemical-active-ingredient concentration in the water was measured by liquid chromatography, and the concentration in the water was calculated.

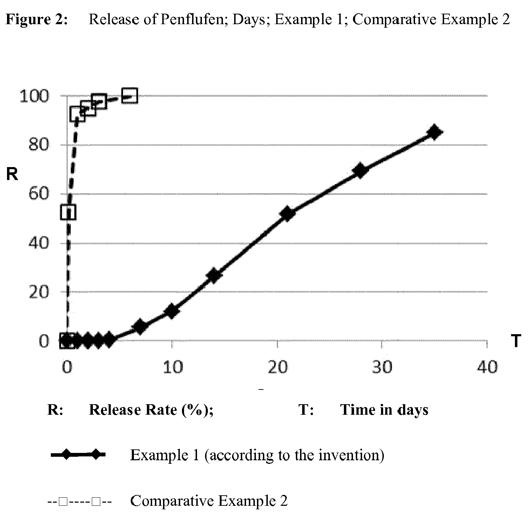

As indicated in Figure 2, clear timed release of the active ingredient was achieved in Example 1. The release rate R1 after the eleventh day, which is T/2, was less than 20%, indicating a sufficient timed-release effect. However, in Comparative Example 2, talc was used instead of calcium stearate, but no release control was evidenced at all.

From the above results, it is confirmed that when a centrifugal-tumbling-type granulator having no heating/drying device is used, the granulation properties are maintained by calcium stearate and talc, and that timed release can be achieved using calcium stearate.

Therefore, the timed-release-type granular agrochemical composition of the present invention can be manufactured using a tumbling- or centrifugal-tumbling-type granulator/mixer or the like having no heating function. Furthermore, it is possible to reduce costs by using a large-scale tumbling-type granulator/mixer (e.g., a concrete mixer or a Manson mixer) or the like that is typically used in agrochemical manufacturing, the granulator/mixer having no heating function.

## Claims

1. A timed-release-type granular agrochemical composition formed by coating primary granules that comprise at least one type of agrochemical active ingredient, a swelling substance, and, depending on the circumstances, a carrier, a surfactant, and/or the other formulants; the primary granules being coated with a binder, a hydrophobic substance, a carrier, and, depending on the circumstances, the other formulants.

2. The composition of claim 1, wherein the swelling agent is selected from among bentonite, starch, and water-absorbent polymers.

3. The composition of claim 1 or 2, wherein the surfactant is selected from among anionic surfactants, non-ionic surfactants, amphoteric surfactants, and cationic surfactants.

4. The composition of any of claims 1 to 3, wherein the binder comprises a combination of a polyol and a polyisocyanate.

5. The composition of any of claims 1 to 3, wherein the binder comprises a combination of a polyamine and a polyisocyanate.

6. The composition of claim 4, wherein the polyol is selected from among polyether polyols, polyester polyols, polybutadiene polyols, polycarbonate polyols, and castor-oil-based (triglyceride-based) polyols.

7. The composition of claim 5, wherein the polyamine is selected from among polyaspartic acid esters.

8. The composition of any of claims 4 to 7, wherein the polyisocyanate is selected from among aromatic polyisocyanates and aliphatic polyisocyanates.

9. The composition of any of claims 1-8, wherein the hydrophobic substance is selected from among calcium stearate, magnesium stearate, and aluminum stearate.

10. The composition of any of claims 1-9, wherein the carrier is selected from among clay, finely powdered pumice, fired diatomaceous earth, kaolin, talc, acid clay, and calcium carbonate.

11. A method for manufacturing the timed-release-type granular agrochemical composition of claim 1, the method comprising the following steps:
- a first step for charging primary granules that comprise at least one type of agrochemical active compound, a swelling substance, and, depending on the circumstances, a carrier, a surfactant, and/or the other formulants into a tumbling- or centrifugal-tumbling-type granulator/mixer;
- a second step for performing tumbling while adding a binder and a hydrophobic substance in alternating fashion or simultaneously;
- a third step for performing tumbling while adding a binder and a carrier in alternating fashion or simultaneously, and then forming an outermost layer; and
- a fourth step for heating the granular composition as needed.

12. The manufacturing method of claim 11, wherein the swelling agent is selected from among bentonite, starch, and water-absorbent polymers.

13. The manufacturing method of claim 11 or 12, wherein the surfactant is selected from among anionic surfactants, non-ionic surfactants, amphoteric surfactants, and cationic surfactants.

14. The manufacturing method of any of claims 11 to 13, wherein the binder comprises a combination of a polyol and a polyisocyanate.

15. The manufacturing method of any of claims 11 to 13, wherein the binder comprises a combination of a polyamine and a polyisocyanate.

16. The manufacturing method of claim 14, wherein the polyol is selected from among polyether polyols, polyester polyols, polybutadiene polyols, polycarbonate polyols, and castor-oil-based (triglyceride-based) polyols.

17. The manufacturing method of claim 15, wherein the polyamine is selected from among polyaspartic acid esters.

18. The manufacturing method of any of claims 14 to 17, wherein the polyisocyanate is selected from among aromatic polyisocyanates and aliphatic polyisocyanates.

19. The manufacturing method of any of claims 11 to 18, wherein the hydrophobic substance is selected from among calcium stearate, magnesium stearate, and aluminum stearate.

20. The manufacturing method of any of claims 11 to 19, wherein the carrier is selected from among clay, finely powdered pumice, fired diatomaceous earth, kaolin, talc, acid clay, and calcium carbonate.
